(19) Europäisches Patentamt
European Patent Office
Office européen des brevets

(11) EP 3 001 583 A1

(12) EUROPEAN PATENT APPLICATION

(43) Date of publication:
**30.03.2016 Bulletin 2016/13**

(51) Int Cl.:
***H04B 10/2513*** *(2013.01)* ***H04B 10/2543*** *(2013.01)*
***H04B 10/61*** *(2013.01)*

(21) Application number: **14306469.9**

(22) Date of filing: **24.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
- **Schuh, Karsten**
**70435 Stuttgart (DE)**
- **Buchali, Fred**
**70435 Stuttgart (FR)**

(74) Representative: **Wetzel, Emmanuelle**
**Alcatel Lucent**
**Intellectual Property & Standards**
**70430 Stuttgart (DE)**

(54) **Method of compensating chromatic dispersion and nonlinear impairments of an optical transmission path using digital backpropagation**

(57) Proposed is a method of compensating chromatic dispersion and nonlinear impairments of an optical transmission path. The method comprises steps of deriving a digital electrical signal corresponding to a received optical transmission signal, determining from the derived electrical signal an overall amount of accumulated chromatic dispersion of the optical transmission path, and filtering the electrical signal, by alternating between filtering steps of a first type, which compensate for respective partial amounts of accumulated chromatic dispersion, and filtering steps of a second type, which compensate for respective partial amounts of nonlinear impairments.

**Fig. 3**

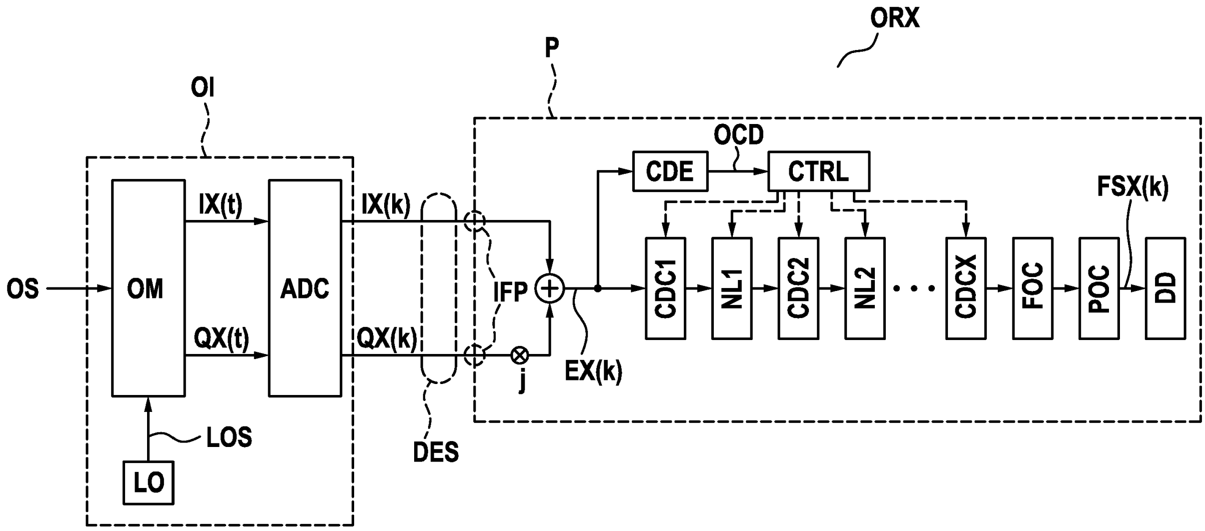


EP 3 001 583 A1

## Description

### Field of the Invention

The invention relates to a method of compensating chromatic dispersion and nonlinear impairments of an optical transmission path. Furthermore, the method relates to an optical receiver for compensating chromatic dispersion and nonlinear impairments of an optical transmission path as well as an optical network node comprising such an optical receiver. Furthermore, the invention relates to a processor for compensating chromatic dispersion and nonlinear impairments of an optical transmission path.

### Background

In optical data transmission an optical transmission signal may be transmitted over one or more optical fiber links that form an optical transmission path. The optical transmission signal inserted by the transmitter at the beginning end of the path may experience different effects during the transmission to the receiving end. One of such effects is that of chromatic dispersion, which causes for optical signals of different respective wavelengths different respective delays. Other effects that may occur are that of so called nonlinear impairments, which may for example include self phase modulation or cross phase modulation due to physical effects such that as the Kerr effect. Usually, the strength of nonlinear impairments depends on the signal power of the optical transmission signal.

Chromatic dispersion is an effect that does not depend on the signal power of the optical transmission signal. Chromatic dispersion is modeled for a given fiber type by a chromatic dispersion factor that is equivalent to a delay that a signal of a specific wavelength experiences when being transmitted over a specific transmission distance. Usually, a chromatic dispersion factor D is given in units such as picoseconds of the delay per nanometer of the wavelength and per km of the fiber length ( ps/(nm*km) ). The accumulated chromatic dispersion CD per wavelength caused by an optical fiber link is given by the chromatic dispersion factor D and the fiber length L via

$$CD = D \cdot L \quad .$$

The actual accumulated chromatic dispersion or delay $\tau_x$ for a signal of a specific wavelength $\lambda_x$ is then given as

$$\tau_x = CD \cdot \lambda_x = D \cdot L \cdot \lambda_x$$

This means, that respective amounts accumulated chromatic dispersions caused by different fiber segments of same respective lengths are essentially equal in the case that the type of the optical transmission fiber is essentially the same for the different fiber segments. This is not true for the effect of nonlinear impairments, as it will be explained now herein.

Figure 1 shows a transmitter TX with an amplifier A, which inserts an optical transmission signal in the transmission direction TD towards a receiver RX for a transmission along an optical transmission path, formed by a number of optical fiber links OL1, OL2, OL3. The optical transmission path with its fiber links OL1, OL2, OL3 contains furthermore additional amplifiers A at regeneration stages R for re-amplification of the optical transmission signal. During transmission, the signal power of the optical transmission signal is attenuated along the optical fiber links. For a given fiber link, the optical power of the optical transmission signal is highest directly behind the amplifier A within a beginning zone HZ. Such a zone HZ may be called a hot zone. Due to the fact that non linear impairments depend on the signal power of the transmission signal, the zones HZ are the areas in which the highest amount of nonlinear impairment are caused. In other words, the dominant part of non linear impairments occur directly at the beginning part of a fiber link behind an amplifier A. Behind a zone HZ, the signal power has decreased to a certain extent, such that non linear impairments caused outside of the zones HZ may be considered to be neglectable.

In order to compensate the effects of chromatic dispersion and nonlinear impairments in a combined manner at a receiving side, a technique called digital backpropagation is known.

Figure 2 illustrates a well known approach of digital backpropagation as it is described in detail in the document "'Compensation of Dispersion and Nonlinear Impairments using Digital Backpropagation', Ip and Kahn, Journal of Lightwave Technology, Volume 26, Issue 20, Oct.15, 2008, pages 3416 - 3425", briefly called Ip and Kahn herein.

A received optical signal OS is received at an optical interface OI and mixed within an optical mixer OM with a local oscillator signal LOS provided by a local oscillator LO, in order to yield an in-phase signal component IX(t) and a quadrature signal component QX(t). These analog electrical signal components are then sampled by an analog digital converter ADC to yield corresponding time-discrete digital electrical signals IX(k) and QX(k) representing in combination a digital electrical signal DES. The two signal components are provided via an interface IFP to a processor P'.

Within the processor P', the signal components are superposed to yield the time-discrete digital electrical signal EX(k) as

$$EX(k) = IX(k) + j \cdot QX(k) \quad .$$

This signal EX(k) corresponds to the received optical transmission signal OS.

The digital electrical signal EX(k) is then filtered using different filtering steps. At a first step CDCA, the electrical signal is filtered, such that a partial amount of accumulated chromatic dispersion is compensated. Such a compensated partial amount of accumulated chromatic dispersion corresponds to a backpropagation in the direction BPD along the optical transmission path by a corresponding respective partial length. The higher this compensated partial amount of accumulated chromatic dispersion is, the longer the respective partial length of backpro-pagation.

As an example, it may be assumed, that the partial amount of accumulated dispersion that is compensated in a first step CDCA corresponds to a backpropagation in the direction BPD back to the point P3 of Figure 1. This point P3 lies within the hot zone HZ of the fiber OL3. Within a next filtering step NLA, a partial amount of nonlinear impairments is compensated. For compensating the nonlinear impairments, an estimate of the instantaneous signal power is used. Ideally, the amount of nonlinear impairments compensated in the step NLA is equal to the amount of nonlinear impairments occurring within the zone HZ at the point P3.

In a next following step CDCB, a further partial amount of accumulated chromatic dispersion is compensated, such that a next step of backpropagation back to the point P2 within a hot zone HZ of Figure 1 may be achieved. In a next further step NLB, a compensation of a further partial amount of nonlinear impairments is carried out. Also here, this compensated partial amount of nonlinear impairments is ideally equal to the amount of nonlinear impairments occurring at the point P2 within the zone HZ of Figure 1.

Further alternating steps of first steps compensating partial amounts of accumulated chromatic dispersion and second steps of compensating partial amounts of nonlinear impairments may be carried out in order to achieve further backpropagation along the optical transmission path in the backpropagation direction BPD of Figure 1.

The scheme of digital backpropagation described above is a scheme, in which preferably for each optical fiber link OL1, OL2, OL3 one single respective nonlinear compensation step is carried out. In such a scheme, it is a crucial aspect that the respective partial backpropagations modeled by the chromatic dispersion compensating steps CDCA, CDCB are partial backpropagations ending at the positions P3, P2, P1 within the zones HZ of Figure 1. This is crucial, since a nonlinear impairment compensation step NLA, NLB should be carried out, such that it corresponds to a nonlinear impairment occurring at the positions P3, P2, P1 within the hot zones HZ. As previously mentioned, this approach uses an estimate of the instantaneous signal power for compensating the nonlinear impairments. Since fiber attenuation reduces the signal power, the further the signal has propagated along the fiber, the lower the signal power and thus the lower the amount of nonlinear effects to be compensated. Therefore, using an estimate of the instantaneous signal power is only adequate when trying to model - or to compensate - nonlinear impairments that relate to a position of the fiber at which attenuation has not reduced the signal power to a greater extent, which is the case for a position within the hot zone. Thus, the step of compensating the chromatic dispersion should compensate an amount of accumulated chromatic dispersion that is equivalent to a backpropagation to a position within the hot zone. Ideally, for achieving an averaged compensation of nonlinear impairments within the hot zone, this position up to which the backpropagation leads is the center of the hot zone. Thus, the approach described above requires knowledge of the length of the optical fiber links OL3, OL2, OL1 in order to properly dimension the partial backpropagations modeled by the chromatic compensation steps CDCA, CDCA.

Performing less than one step of nonlinear compensation NLA, NLB per fiber link OL3, OL2, OL1 reduces the efficiency of the above described scheme drastically.

## Summary

Proposed is a method of compensating chromatic dispersion and nonlinear impairments of an optical transmission path. The method comprises steps of

- deriving a digital electrical signal corresponding to a received optical transmission signal,
- determining from the derived electrical signal an overall amount of accumulated chromatic dispersion of the optical transmission path,

- and filtering the electrical signal, by alternating between filtering steps of a first type, which compensate for respective partial amounts of accumulated chromatic dispersion, and filtering steps of a second type, which compensate for respective partial amounts of nonlinear impairments.

An overall amount of accumulated dispersion compensated for by the whole of the filtering steps of the first type is chosen in dependence on the determined overall amount of accumulated dispersion.

The filtering steps of the second type each comprise

- deriving a signal power of the electrical signal,
- filtering the derived signal power in the time domain using a low-pass filter,
- determining an amount of phase correction in dependence on the filtered signal power,
- and correcting the phase of the electrical signal by the determined amount of phase correction.

The filter length of the low pass-filter for a specific filtering step of the second type is chosen in dependence on that partial amount of accumulated chromatic dispersion that was compensated for by the specific filtering step of the first type preceding the specific filtering step of the second type.

Preferably, the low pass filter has a frequency transfer function for which a difference between the peak of the main lobe and the peak of the most dominant side lobe is greater than 20dB.

Preferably, the amount of phase correction is determined in dependence on the filtered signal power and in dependence on a non-linearity coefficient.

Preferably, the filtering steps of the first type comprise filtering the electrical signal using a filter that compensates for a predefined partial amount of accumulated chromatic dispersion.

Preferably, the electrical signal is a first electrical signal corresponding to a first received optical transmission signal received along a first polarization plane, wherein the method comprises furthermore

- deriving a second digital electrical signal corresponding to a second received optical signal received along a second polarization plane that is orthogonal to the first polarization plane,
- determining from both of the derived electrical signals the overall amount of accumulated chromatic dispersion,
- filtering the second electrical signal, by alternating between the filtering steps of the first type and the filtering steps of the second type,

wherein the filtering steps of the first type comprise furthermore

- filtering the second electrical signal using the filter that compensates for a predefined partial amount of accumulated dispersion,

and wherein the filtering steps of the second type comprise furthermore

- deriving the signal power from the first and the second electrical signal,
- correcting the phase of the first electrical signal and the phase of the second electrical signal by the amount of phase correction.

Preferably, the amount of phase correction is determined in dependence on the filtered signal power and in dependence on a non-linearity coefficient.

Preferably, the method comprises furthermore

- performing polarization demultiplexing, by filtering the first and the second electrical signal using a butterfly filter, yielding a third and a fourth electrical signal,
- deriving from the third and the fourth electrical signal a quality parameter indicating a signal quality,
- and adapting the non-linearity coefficient in dependence on the quality parameter.

Proposed is also an optical receiver for compensating chromatic dispersion and nonlinear impairments of an optical transmission path,

comprising an optical interface, which is configured to derive a digital electrical signal corresponding to a received optical transmission signal, and at least one processor, which is configured

- to determine from the derived electrical signal an overall amount of accumulated chromatic dispersion of the optical transmission path,
- and to filter the electrical signal, by alternating between filtering steps of a first type, which compensate for respective partial amounts of accumulated chromatic dispersion, and filtering steps of a second type, which compensate for respective partial amounts of nonlinear impairments,

wherein the processor is configured to choose an overall amount of accumulated dispersion compensated for by the whole of the filtering steps of the first type in dependence on the determined overall amount of accumulated dispersion, wherein the filtering steps of the second type comprise

- deriving a signal power of the electrical signal,
- filtering the signal power in the time domain using a low-pass filter,
- determining an amount of phase correction in dependence on the filtered signal power,
- correcting the phase of the electrical signal by the amount of phase correction,

and wherein the processor is configured to choose the filter length of the low pass-filter for a specific filtering step of the second type in dependence on the partial amount of accumulated chromatic dispersion compensated for by the specific filtering step of the first type preceding the specific filtering step of the second type.

Preferably, the low pass filter has a frequency transfer function for which a difference between the peak of the main lobe and the peak of the most dominant side lobe is greater than 20dB.

Preferably, the processor is configured to determine the amount of phase correction in dependence on the filtered signal power and in dependence on a non-linearity coefficient.

Preferably, the filtering steps of the first type comprise filtering the electrical signal using a filter that compensates for a predefined partial amount of accumulated chromatic dispersion.

Preferably, the electrical signal is a first electrical signal corresponding to a first received optical transmission signal received along a first polarization plane, wherein the optical interface is furthermore configured to derive a second digital electrical signal corresponding to a second received optical transmission signal received along a second polarization plane, wherein the processor is furthermore configured

- to determine from both of the derived electrical signals the overall amount of accumulated chromatic dispersion,
- and to filter the second electrical signal, by alternating between the filtering steps of the first type and the filtering steps of the second type,

wherein the filtering steps of the first type comprise furthermore

- filtering the second electrical signal using the filter that compensates for a predefined partial amount of accumulated dispersion,

and wherein the filtering steps of the second type comprise furthermore,

- deriving the signal power from the first and the second electrical signal,
- correcting the phase of the first electrical signal and the phase of the second electrical signal by the amount of phase correction.

Preferably, the processor is configured to determine the amount of phase correction in dependence on the filtered signal power and in dependence on a non-linearity coefficient.

Preferably, the processor is furthermore configured

- to perform polarization demultiplexing, by filtering the first and the second electrical signal using a butterfly filter, yielding a third and a fourth electrical signal,

- to derive from the third and the fourth electrical signal a quality parameter indicating a signal quality,
- and to adapt the non-linearity coefficient in dependence on the quality parameter.

Proposed is furthermore an optical network node comprising a proposed optical receiver.

Proposed is furthermore a processor for compensating chromatic dispersion and nonlinear impairments of an optical transmission path, that is configured

- to receive a digital electrical signal corresponding to a received optical transmission signal,
- to determine from the derived electrical signal an overall amount of accumulated chromatic dispersion of the optical transmission path,
- and to filter the electrical signal, by alternating between filtering steps of a first type, which compensate for respective partial amounts of accumulated chromatic dispersion, and filtering steps of a second type, which compensate for respective partial amounts of nonlinear impairments,

wherein the processor is configured to choose an overall amount of accumulated dispersion compensated for by the whole of the filtering steps of the first type in dependence on the determined overall amount of accumulated dispersion, wherein the filtering steps of the second type comprise

- deriving a signal power of the electrical signal,
- filtering the signal power in the time domain using a low-pass filter,
- determining an amount of phase correction in dependence on the filtered signal power,
- correcting the phase of the electrical signal by the amount of phase correction,

and wherein the processor is configured to choose the filter length of the low pass-filter for a specific filtering step of the second type in dependence on the partial amount of accumulated chromatic dispersion compensated for by the specific filtering step of the first type preceding the specific filtering step of the second type.

**Brief Description of the Figures**

Figure 1 shows an optical transmission path.

Figure 2 shows steps of a method of digital backpropagation according to the prior art.

Figure 3 shows a proposed optical receiver.

Figure 4 shows a filtering step of a first type according to a first embodiment.

Figure 5 shows a filtering step of a second type according to the first embodiment.

Figure 6a and 6b shows a known low-pass filter.

Figure 7a and 7b show a proposed low pass filter.

Figure 8 show the proposed optical receiver according to a second embodiment.

Figure 9 shows a filtering step of the first type according to the second embodiment.

Figure 10 shows a filtering step of the second type according to the second embodiment.

Figure 11 shows a butterfly filter.

Figure 12 shows a step of determining a quality parameter.

Figure 13 shows a first variant of the proposed optical receiver according to the second embodiment.

Figure 14 shows a second variant of the proposed optical receiver according to the second embodiment.

Figure 15 shows a third variant of the proposed optical receiver according to the second embodiment.

Figure 16 shows a fourth variant of the proposed optical receiver according to the second embodiment.

Figure 17 shows a fifth variant of the proposed optical receiver according to the second embodiment.

Figure 18a shows different signal qualities achieved by different filters.

Figure 18b shows different frequency responses of different low pass filters.

Figure 19 shows achieved signal qualities for different filters when varying the numbers of filtering steps per fiber link.

Figure 20 shows achieved signal qualities for a varied filter length of the proposed low pass filter.

**Description of Embodiments**

Figure 3 shows a proposed optical receiver ORX.

The optical receiver ORX contains an optical interface OI as previously described with regard to Figure 2. Furthermore, the receiver ORX contains a processor P with one or more signal interfaces IFP.

The processor P superposes the signal components IX(k) and QX(k) via

$$EX(k) = IX(k) + j \cdot QX(k)$$

to yield the digital electrical signal EX(k).

From this digital electrical signal EX(k), the processor P determines in a chromatic dispersion estimation step CDE an overall amount of accumulated chromatic dispersion OCD that is caused by the optical transmission path over which the optical signal OS was transmitted. This step of estimating an accumulated chromatic dispersion of an optical transmission path may be carried out as described in detail in the document " 'Blind Adaptive Chromatic Dispersion Compensation and Estimation for DSP-Based Coherent Optical Systems', Corsini et.al., Journal of Lightwave Technology, Volume 31, Issue 13, July 1, 2013, pages 2131 - 2139".

The electrical signal EX(k) is filtered, by alternating between filtering steps of a first type and filtering steps of a second type. The filtering steps of the first type CDC1, CDC2 compensate for respective partial amounts of accumulated chromatic dispersion, while the filtering steps of the second type NL1, NL2 compensate for respective partial amounts of nonlinear impairments.

The different filtering steps of the first type and of the second type are under control of a control unit CTRL, as it will be described later on in further detail.

The control unit CTRL of the processor P controls the overall amount of accumulated dispersion compensated by the filtering steps of the first type CDC1, CDC2 and a filtering step CDCX. The filtering step CDCX is a final step of compensating a partial amount of accumulated chromatic dispersion.

Preferably, the step CDCX is followed by a step of frequency offset compensation FOC and then next followed by a step of phase offset compensation POC, finally yielding the electrical signal FSX(k). The signal FSX(k) may then be used in a decision step DD for deriving received transmission data.

Figure 4 shows a filtering step of the first type CDC1, CDC2 in further detail.

The electrical signal EX(k) is filtered by a chromatic dispersion compensation filter CDF yielding the filtered signal EX'(k). For such filtering the following considerations hold.

According the document "S. Savory, 'Digital filters for coherent optical receivers,' Opt. Express 16, 804-817 (2008)", briefly called Savory herein, the effect of chromatic dispersion caused by an optical transmission path may be expressed as a time discrete impulse response of a filter function *g* as

$$g(z,t) = \sqrt{\frac{c}{j \cdot \lambda^2 \cdot D \cdot z}} \cdot \exp\left(-j \cdot \frac{\pi \cdot c}{D \cdot z \cdot \lambda^2} \cdot t^2\right) \quad ,$$

wherein z is the point in space of a location at a fiber equivalent to a fiber length *L*, t is the time index, D is the dispersion factor of the optical fiber, preferably given in picoseconds per nanometer per kilometer, c is the speed of light, λ is the wavelength and j is the well known imaginary number.

Within the above equation, the term

$$CD = D \cdot z$$

represents the accumulated dispersion per wavelength CD equivalent to

$$CD = D \cdot L$$

with L being the fiber length.

For the time discrete filter function *g* given above, an inverse filter $\alpha$ may be derived in the time domain as laid out in detail in the document Savory.

Such inverse filter compensating for a chromatic dispersion caused by a partial fiber length z' has a filter length N as

$$N = 2 \cdot \left\lfloor \frac{|D|\, z'\, \lambda^2}{2\, c\, T^2} \right\rfloor + 1$$

with the time discrete index k in the time domain within the range

$$-\left\lfloor \frac{N}{2} \right\rfloor \le k \le +\left\lfloor \frac{N}{2} \right\rfloor \quad .$$

The filter coefficients of the inverse filter $\alpha$ are then given via

$$a_k = \sqrt{\frac{j \cdot c \cdot T^2}{D \cdot z' \cdot \lambda^2}} \cdot \exp\left(-j \cdot \frac{\pi \cdot c \cdot T^2}{D \cdot z' \cdot \lambda^2} \cdot k^2\right) \quad .$$

Herein, T is the sampling interval, while the term

$$D \cdot z'$$

is equivalent to a partial amount of accumulated chromatic dispersion per wavelength that shall be compensated by the inverse filter.

The amount of fiber length z' that is to be compensated determines together with the dispersion value D via the term

$$D \cdot z'$$

is the amount of accumulated chromatic dispersion per wavelength that is compensated by the inverse filter.

The inverse filter may be implemented in the time domain. Alternatively, the inverse filter may be implemented in the frequency domain using as a frequency transform the fast Fourier transform (FFT) followed by dispersion compensation using the frequency response of the inverse filter and a next following inverse fast Fourier transform (IFFT) as an inverse frequency transform. Such frequency domain implementation preferably uses after the inverse frequency transform the technique of overlap-add in the time domain to yield the resulting filtered signal.

Figure 5 shows a step of the second type NL1, NL2 for compensating a partial amount of nonlinear impairments. The filtered electrical signal EX'(k),that was yielded by the preceding filtering step CDC1, CDC2 of the first type, is now used to derive within a power derivation step PDS a signal power of the filtered electrical signal. This signal power is determined via

$$P(k) = \left|EX(k)\right|^2 \quad .$$

The signal power P(k) is then filtered in the time domain using a low pass filter LPF yielding the filtered signal power P'(k). The low pass filter LPF is preferably a cosine-square ($\cos^2$) filter.

Even more preferably, the low pass filter LPF has a corresponding frequency transfer function, for which a difference between the peak of the main lobe and the peak of the most dominant side lobe is greater than 20dB.

Figure 6a shows a filter function FT1 in the time domain of the low pass filter.

Figure 6b shows the corresponding frequency response FF1 of the low pass filter function of

Figure 6a. Clearly, it can be observed that between the peak PK1 of the main lobe and the peak PK2 of the most dominant side lobe a difference of more than 20dB, preferably more than 25dB, is given.

Such a difference between the power levels of these peaks PK1 and PK2 of more than 20dB allows a suppression of high frequency components within the power signal to a certain extent.

Figure 7a shows in the time domain a filter function FT2 as proposed in the document "L. Li, Z. Tao, L. Dou, W. Yan, S. Oda, T. Tanimura, T. Hoshida, and J. Rasmussen, 'Implementation Efficient Nonlinear Equalizer Based on Correlated Digital Backpropagation,' in Optical Fiber Communication Conference/National Fiber Optic Engineers Conference 2011, OSA Technical Digest (CD) (Optical Society of America, 2011), paper OWW3", briefly called herein Li et.al.. Looking at the corresponding frequency response FFT2 in Figure 7b, it is evident that the difference between the peak PK11 of the main lobe and the peak PK12 of the most dominant side lobe is smaller than 20dB. Thus, high frequency components present within the power signal are less attenuated by such a low pass filter of Figures 7a and 7b than when applying a proposed low pass filter of Figures 6a and 6b.

Coming back to Figure 5, it is to be noted, that the filter length FL of the low pass filter LPF for the step NL1, NL2 is determined and chosen by the control unit CTRL. The filter length FL may be determined via the equation

$$FL = \left\lfloor \frac{|D|\, z'\, \lambda^2}{4\, c\, T^2} \right\rfloor \quad .$$

Within the above equation, the term

$$|D|\, z'$$

represents the amount of accumulated dispersion per wavelength that has been compensated by the preceding filtering step of the first type. In other words, the filter length of the low pass filter LPF for the filtering step NL is chosen in dependence on the partial amount of accumulated chromatic dispersion that was compensated by the filtering step CDC preceding the filtering step NL.

A phase correction term PCT, alternatively called an amount of phase correction, is determined in dependence on the filtered signal power P'(k) via

$$PCT = \exp\left(-j \cdot P'(k) \cdot \gamma\right) .$$

Herein, $\gamma$ is the so called nonlinear coefficient, which depends on the type of the optical fiber as well as the power level of the optical signal provided by the amplifier at the insertion point of the optical fiber.

In other words, the phase correction term PCT is determined in dependence on the filtered signal power P'(k) and in dependence on the nonlinear coefficient $\gamma$.

A delay element DEL preferably compensates a processing delay $\tau$ caused by the processing steps PDS, LPF and PCE.

The advantage of the proposed method is, that within a step NL1, NL2 of the second type compensating nonlinear impairments, the filter length of the low pass filter LPF is adapted to the partial amount of accumulated chromatic dispersion that is compensated by the preceding filtering step of the first type for chromatic dispersion compensation. Thus, it becomes possible to adapt the amount of nonlinear impairments compensated for in dependence on the specific point within the fiber, that corresponds to the partial amount of the accumulated dispersion that was compensated.

Furthermore, it has to bared in mind, that the signal power contains high-frequency components as well as non-high frequency components. The high-frequency components of the signal power are not equally present at different positions of the fiber and are also highly varying in time, while it is an adequate assumption that the non-high-frequency components of the signal power are rather equally present at the different positions of the fiber and are rather slowly varying in time. Thus, by removing the high frequency components from the signal power, the step of compensating nonlinear impairments is one that may relate to any position along the fiber and not only a position within the hot zone. Therefore, the proposed method allows digital backpropagation without having to know the exact position of a hot zone. Thus, the proposed method of digital backpropagation can be carried out without having topology information such as fiber length at hand.

Furthermore, the increased degree of suppressing high frequency components achieved by the proposed filter, as illustrated in the Figures 6a and 6b, in comparison to the known filter function, as illustrated in the Figures 7a and 7b, allows to remove high frequency components of the signal power to a greater extent.

To summarize the above in other words, the proposed filter function with high frequency suppression and filter length adaptation is able to perform nonlinear impairment compensation in relation to positions that deviate from the positions P3, P2, P1 of Figure 1, but instead may occur at any given position within the optical fiber links OL3, OL2, OL1. Thus, the proposed method allows to perform digital backpropagation without having to provide knowledge about the fiber lengths of the optical fiber lengths OL3, OL2, OL1, as needed for the backpropagation method proposed in the document Ip and Kahn. Instead, digital backpropagation can be performed by the proposed method independently of the fiber link lengths. Thus, all that has to be known by the proposed method is the overall amount of accumulated chromatic dispersion that has to be compensated by the whole of the filtering steps of the first type. This is not possible according to the known technique of Ip and Kahn.

Figure 8 shows the proposed optical receiver ORX2 according to a second embodiment.

It shall be assumed, that for the optical receiver ORX according to the first embodiment of Figure 3, the optical signal OS is a first received optical transmission signal that is preferably but not necessarily received along a first polarization plane. Such receiving along the first polarization plane is performed, in that the optical mixer OM samples the optical signal OS along a first polarization plane that may be the so called x-plane.

For the optical receiver ORX2 of the second embodiment of the Figure 8, it shall be assumed that the optical signal OS' comprises two polarization division multiplexed optical signal components, where one signal component is the signal OSX of the x-plane and the other signal component is the signal OSY of the y-plane.

A first electrical signal DES1 is equivalent to the superposed signal EX(k), which corresponds to the optical signal component OSX received along the first polarization plane as the x-plane.

The second electrical signal DES2 is equivalent to a superposed electrical signal EY(k), which corresponds to the second signal component OSY received along the second polarization plane as the y-plane, which is orthogonal to the first polarization plane.

For this derivation of the electrical signals DES1 and DES2, the optical interface OI1 performs within an optical hybrid mixer OM1 hybrid mixing of the signal OSX' with the local oscillator signal LOS and detects the analog signal components IX(t), QX(t), IY(t) and QY(t) along corresponding polarization planes x and y. These analog signal components are then sampled by the analog digital converter ADC to yield the corresponding digital electrical signal components IX(k), QX(k) and IY(k), QY(k), representing the digital electrical signals DES1 and DES2, respectively. The signals DES1 and DES2 are then provided via signal interfaces IFP to a processor P1.

The yielded electrical signals EX(k) and EY(k) are then used in a chromatic dispersion estimation step CDE' to determine the amount of accumulated chromatic dispersion OCD' caused by the optical transmission path.

The electrical signals EX(k) and EY(k) are then filtered, by alternating between filtering steps of the first type CDC11, ..., CDC12 and filtering steps of the second type NL11, NL12. The filtering of the first signal EX(k) is carried out as previously described above with regard to the Figure 4. Furthermore, a corresponding filtering of the signal EY(k) is carried out in the filtering steps of the first type CDC11, CDC12. This is illustrated in Figure 9, wherein a same chromatic dispersion compensation filter CDF is applied to the electrical signals EX(k) and EY(k) individually.

Figure 10 shows the filtering steps NL11, NL12 of the second type according to the second embodiment. In such a filtering step NL11, NL12 for compensating nonlinear impairments, the signal power P1(k) is derived in dependence on the first and the second electrical signal, preferably via

$$P1(k) = |EX(k)|^2 + |EY(k)|^2 \quad .$$

The signal power P1(k) is then filtered using a low pass filter LPF as previously described with regard to Figure 5. This yields the filtered signal power P1'(k). In a step PCE1, an amount of phase correction PCT1 is determined in dependence on the filtered signal power P1'(k) via

$$PCT1 = \exp(-j \cdot P1'(k) \cdot \gamma) \quad .$$

Each phase of the first electrical signal and the phase of the second electrical signal is then corrected by the determined phase correction term PCT1.

A delay element DEL preferably compensates a processing delay $\tau$ caused by the processing steps PDS1, LPF and PCE1.

Coming back to Figure 8, a final step of the first type CDCX1 for compensating a partial accumulated chromatic dispersion compensates a remaining amount of accumulated chromatic dispersion.

Next following is a step PDEM of polarization demultiplexing, which is shown in detail in Figure 11. The filtered first electric signal EX(k) and the filtered second electric signal EY1(k) are filtered using the butterfly filter BF for yielding a third electrical signal EX11(k) and a fourth electrical signal EY11(k). The finite impulse response (FIR) filters F1, F2, F3, F4 of the butterfly filter BF and their corresponding filter coefficients are preferably determined via the constant modulus algorithm. A detailed description of this algorithm can be found in the document "Seb Savory, 'Digital Coherent Optical Receivers: Algorithms and Subsystems', IEEE JOURNAL OF SELECTED TOPICS IN QUANTUM ELECTRONICS, VOL. 16, NO. 5, SEPTEMBER/OCTOBER 2010"

Coming back to Figure 8, the step of polarization demultiplexing PDEM is preferably followed by a step FOC1 of frequency offset compensation and a next following step POC1 of phase offset compensation.

From the filtered electrical signals, a quality parameter QP indicating a signal quality of the received signal is preferably determined in a determination step QDS, as shown in Figure 12. This determination may be carried out as outlined in detail in the document "Pauluzzi, D.R.; Beaulieu, N.C., 'A comparison of SNR estimation techniques for the AWGN channel' Communications, IEEE Transactions on , vol.48, no.10, pp.1681,1691, Oct 2000". The quality parameter is preferably a so called q-factor. This step of determining the quality parameter QP is not explicitly shown in Figure 8. The step of determining the quality parameter is preferably carried out after the step POC1 of phase offset compensation. The quality parameter QP is then provided to the control unit CTRL.

The control unit CTRL may use the quality parameter for adapting the nonlinearity coefficient $\gamma$ in an iterative manner. This may be carried out, by measuring the quality parameter for successive time instances and adapting the nonlinearity coefficient equation $\gamma$ in dependence on observed changes of the quality parameter over time.

Figure 13 shows a first variant P11 of the processor of the optical receiver according to the second embodiment. In this first variant, the control unit CTRL varies the nonlinearity coefficient $\gamma$ in dependence on the quality parameter QP within the filtering steps NL11A, ..., NL1NA of the second type as previously described above. Preferably, this variation is carried out, by using a predefined nonlinearity coefficient $\gamma'$ that is multiplied by a scalar factor *f*, wherein the coefficient $\gamma'$ remains constant while the scalar factor f is varied. This is equivalent to a weighting of the nonlinearity

coefficient $\gamma'$ by the scalar factor *f*. Furthermore, the control unit CTRL uses the determined overall amount of accumulated chromatic dispersion that is provided to the control unit CTRL, for varying within the filtering steps of the first type CDC11A, CDC12A the amounts of partial amounts of accumulated chromatic dispersion per wavelength

$$CD' = D \cdot z'$$

compensated by these filtering steps CDC11A, CDC12A. Furthermore, the control unit CTRL controls a residual partial amount of accumulated chromatic dispersion compensated by a final filtering step CDCXA of the first type.

The control unit CTRL furthermore controls the filter length of the low pass filter used in the steps of the second type NL11A, NL1NA of compensating nonlinear impairments. Thus, the control unit CTRL adapts the filter length of the low pass filter for the steps NL11A, NL1NA steps of the second type to the respective partial amounts of accumulated dispersion compensated by the different filtering steps of the first type CDC11A and CDC12A.

Figure 14 shows a second variant P12 of the processor of the optical receiver according to the second embodiment. The processor P12 uses the provided overall amount of accumulated chromatic dispersion OCD', for determining, how many compensation steps of the first type CDC11B, ..., CDC1NB and of the second type NL11A, ..., NL1NA are to be engaged or activated. The filtering steps of the first type CDC11B, ..., CDC1NB compensate respective fixed partial amounts accumulated chromatic dispersion, while the filtering steps of the second type NL11A, NL1NA have low pass filters with respective fixed filter lengths. These filter lengths are chosen or set in accordance to the partial amounts of accumulated chromatic dispersion compensated by the respective preceding filtering steps of the first type CDC11B, ..., CDC1NB.

The control unit CTRL is able to activate or deactivate one or more of the filtering steps of the first type CDC11B, ..., CDC1NB and of the second type NL11A, ..., NL1NA. Thus, the control unit CTRL is able to choose or set the overall amount of accumulated chromatic dispersion compensated by the filtering steps of the first type CDC11B, ... , CDC1NB. The control unit CTRL sets the amount of phase correction compensated by the filtering steps of the second type NL11A, ... , NL1NA, by setting the nonlinear coefficient $\gamma$ to either a predefined value or to the value zero. Furthermore, the control unit CTRL provides an amount of residual chromatic dispersion RCD to a final filtering step CDCX of compensating a residual accumulated chromatic dispersion.

The step CDCX is preferably followed by one or more further steps DSP of digital signal processing, such as frequency offset compensation, phase offset compensation, polarization demultiplexing and/or data decision.

Figure 15 shows a third variant of the processor P13 of the optical receiver according to the second embodiment. The processor P13 is similar to the process or P12 of Figure 14, with the difference that the final filtering step CDCXF compensates a fixed amount of residual accumulated chromatic dispersion, and with the difference that the preceding chromatic compensation filtering steps of the first type CDC11A, CDC1NA compensate respective variable amounts of partial accumulated chromatic dispersion. The variable amounts of partial accumulated chromatic dispersion are under control of the control unit CTRL. Furthermore, the control unit CTRL controls the nonlinear coefficients $\gamma$ for the filtering steps of the second type NL11A, ..., NL1NA, using the quality parameter QP as previously described above, using a factor or weighting approach. Even furthermore, the control unit CTRL controls the filter length FL of the low-pass filters within the filtering steps of the second type NL11A,..., NL1NA. Thus, the filter lengths of the low pass filters of these filtering steps NL11A,..., NL1NA are adapted to the respective amounts of accumulated chromatic dispersion compensated for by the respective preceding filtering step of the first type CDC11A, CDC1NA.

Figure 16 shows a fourth variant P14 of the processor of the optical receiver according to the second embodiment. The filtering steps of the first type CDC11A, ... , CDC1NA are under control of the control unit CTRL as previously described with regard to Figure 15. Also the nonlinearity compensation filtering steps of the second type NL11A, ... , NL11N are under control of the control unit CTRL as previously described with regard to Figure 15.

The filtered signals are coupled out behind the different filtering stages finished by a filtering step of the second type NL11A, ..., NL11N stage finished. The coupled out filtered signals are provided to a switch SW. The switch SW is under control of the control unit CTRL. Thus, the control unit CTRL is able to decide, which of the coupled out filtered signals is provided to the final fixed filtering step CDCXF of compensating a residual accumulated chromatic dispersion. In other words, the control unit CTRL is able to remove a number of the first and of the second filtering steps from the chain of signal processing via the switching at the switch SW.

Figure 17 shows a fifth variant P15 of the processor of the optical receiver according to the second embodiment. Each filtering step of the first type CDC11B, ..., CDC1NB performs a compensation of a fixed amount of accumulated chromatic dispersion as previously described with regard to Figure 14. Furthermore, the filtering steps of the second type NL11A, ..., NL1NA perform respective compensation of nonlinear impairments using low pass filters of fixed length that correspond to the respective partial amounts of accumulated chromatic dispersion compensated by the respective filtering steps of the first type CDC11B, ..., CDC1NB.

The control unit CTRL uses the overall amount of chromatic dispersion OCD' to determine, after which filtering stage the electrical signals are to be coupled out and provided to a switch SW in order to remove one or more stages from the chain of signal processing.

The control unit CTRL furthermore provides an amount of residual accumulated chromatic dispersion RCD to a final stage CDCX that performs compensation of the residual amount of accumulated chromatic dispersion.

The control unit CTRL uses the quality parameter QP for adapting the nonlinearity coefficient $\gamma$ as previously described above.

Figure 18a shows Q-square factors $Q^2$ over the span length SL of a fiber link in percent when using different filters for the low pass filter within the second type of filtering step for compensating nonlinear impairments. A position RXS indicates the receiving end of the fiber while the position TXS indicates the beginning end or transmitting end of the fiber. In the case that no low pass filter is used, Q-square factors shown by the curve C1 are achieved. The area HZ corresponds to the hot zone of the fiber, within which the best results of the Q-square factor can be achieved. It has to bared in mind that this is only appropriate in the case that the first type of filtering steps compensation partial accumulated chromatic dispersions that correspond to backpropagation up to points or positions located within the hot zone HZ, as for example the point P3 in Figure 1.

In the case of using a low-pass filter as proposed in the document Li et.al., a removal of high frequency components by a filter function with a frequency response FC2 as shown in Figure 18b is applied. This yields results as shown by the curve C2 in Figure 18a. Such filtering is of advantage for the case, that the partial accumulated chromatic dispersion compensated by the filtering steps of the first type achieve backpropagations into the hot zones HZ, although the achieved signal quality, curve C2, is slightly less than when using no low-pass filter at all, curve C1.

Using a proposed low pass filter, for example cosine-square filter, with a corresponding frequency response FC3 shown in Figure 18b achieves results given as the curve C3 in Figure 18a. Although the achieved signal quality indicated by the curve C3 within the hot zone HZ is lower than for the other types of filtering, the achieved signal qualities indicated by the curve C3 outside of the hot zone HZ is higher than for the other types of filtering. The increase removal of high frequency components of the signal power is an adequate way of modeling the signal power at any possible location within the fiber, even outside of a zone HZ. This explains why the results of the curve C3 achieve high signal qualities outside of the zone HZ. What has to be bared in mind is that when using a low-pass filter as proposed herein, a compensation of partial accumulated chromatic dispersions can be carried in digital backpropagation independently of the point in space or the position in the fiber to which the compensated partial accumulated chromatic dispersion corresponds. Thus, the proposed method allows to perform digital backpropagation independently of any knowledge of the fiber length. Furthermore, the adaptation of the filter length of the low pass filter allows to adapt the nonlinearity filtering step to the preceding filtering step of chromatic dispersion compensation. This is not the case for the known methods of digital backpropagation.

Figure 19 shows achieved signals qualities $Q^2$ for different numbers of fiber links compensated for within one single step of compensating an accumulated chromatic dispersion. When applying no filtering to the derived signal power within a filtering step of the second type at all, signal qualities indicated by the curve C11 are achieved. When applying a simple averaging filter as a low-pass filter within a filtering step of the second type at all, signal qualities indicated by the curve C12 are achieved. When applying a proposed low-pass filter within a filtering step of the second type at all, signal qualities indicated by the curve C13 are achieved.

Figure 20 shows achieved signals qualities $Q^2$ for a given constellation of an optical transmission path for a varied filter length FL of the low-pass filter within the second type of filtering steps. Clearly, an adaptation of the filter lenghth FL allows to achieve a maximised signal quality $Q^{2.}$

The functions of the various elements shown in the different figures, including any functional blocks labeled as 'processor' or 'control unit', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'control unit' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow diagrams of processing steps represent various processes which may be substantially represented in computer readable medium and so executed by a computer or processor, whether or not such computer or processor is explicitly shown.

A person of skill in the art would readily recognize that steps of various above-described methods can be performed by programmed computers. The different embodiments are also intended to cover computers programmed to perform the steps of the above-described methods.

## Claims

1. Method of compensating chromatic dispersion and nonlinear impairments of an optical transmission path, comprising

   - deriving a digital electrical signal (EX(k)) corresponding to a received optical transmission signal (OS),
   - determining from the derived electrical signal (EX(k)) an overall amount of accumulated chromatic dispersion (OCD) of said optical transmission path,
   - filtering said electrical signal, by alternating between filtering steps of a first type (CDC1, CDC2), which compensate for respective partial amounts of accumulated chromatic dispersion, and filtering steps of a second type (NL1, NL2), which compensate for respective partial amounts of nonlinear impairments,

   wherein an overall amount of accumulated dispersion compensated for by the whole of said filtering steps of said first type is chosen in dependence on the determined overall amount of accumulated dispersion (OCD), wherein the filtering steps of said second type (NL1, NL2) comprise

   - deriving a signal power (P(k)) of said electrical signal,
   - filtering said signal power (P(k)) in the time domain using a low-pass filter (LPF),
   - determining an amount of phase correction (PCT) in dependence on the filtered signal power (P'(k)),
   - correcting the phase of said electrical signal by said amount of phase correction (PCT),

   and wherein the filter length of said low pass-filter (LPF) for a specific filtering step of said second type (NL1) is chosen in dependence on the partial amount of accumulated chromatic dispersion compensated for by the specific filtering step of said first type (CDC1) preceding said specific filtering step of said second type (NL1).

2. Method according to claim 1, wherein said low pass filter (LPF) has a frequency transfer function for which a difference between the peak of the main lobe (PK1) and the peak of the most dominant side lobe (PK2) is greater than 20dB.

3. Method according to claim 1, wherein said amount of phase correction (PCT) is determined in dependence on said filtered signal power (P'(k)) and in dependence on a non-linearity coefficient.

4. Method according to claim 1, wherein the filtering steps of said first type (CDC1, CDC2) comprise

   - filtering said electrical signal (EX(k)) using a filter that compensates for a predefined partial amount of accumulated chromatic dispersion.

5. Method according to claim 1, wherein said electrical signal is a first electrical signal (EX(k)) corresponding to a first received optical transmission signal received along a first polarization plane, comprising furthermore

   - deriving a second digital electrical signal (EY(k)) corresponding to a second received optical signal received along a second polarization plane that is orthogonal to said first polarization plane,
   - determining from both of said derived electrical signals said overall amount of accumulated chromatic dispersion,
   - filtering said second electrical signal (EY(k)), by alternating between said filtering steps of said first type (CDC11, CDC12) and said filtering steps of said second type (NL11, NL12),

   wherein said filtering steps of said first type (CDC11, CDC12) comprise furthermore

   - filtering said second electrical signal (EY(k)) using said filter that compensates for a predefined partial amount of accumulated dispersion,

   wherein said filtering steps of said second type (NL11, NL12) comprise furthermore

   - deriving said signal power (P1(k)) from said first (EX(k)) and said second (EY(k)) electrical signal,

- correcting the phase of said first electrical signal (EX(k)) and the phase of said second electrical signal (EY(k)) by said amount of phase correction (PCT1).

**6.** Method according to claim 5,
wherein said amount of phase correction (PCT1) is determined in dependence on said filtered signal power (P1'(k)) and in dependence on a non-linearity coefficient.

**7.** Method according to claim 5,
comprising furthermore

- performing polarization demultiplexing, by filtering said first and said second electrical signal using a butterfly filter (BF), yielding a third (EX11(k)) and a fourth electrical signal (EY11(k)),
- deriving from said third (EX11(k)) and said fourth electrical (EY11(k)) signal a quality parameter (QP) indicating a signal quality,
- adapting said non-linearity coefficient in dependence on said quality parameter (QP).

**8.** Optical receiver for compensating chromatic dispersion and nonlinear impairments of an optical transmission path, comprising an optical interface (OI), which is configured to derive a digital electrical signal (EX(k)) corresponding to a received optical transmission signal (OS), and at least one processor (P), which is configured

- to determine from the derived electrical signal (EX(k)) an overall amount of accumulated chromatic dispersion (OCD) of said optical transmission path,
- and to filter said electrical signal, by alternating between filtering steps of a first type (CDC1, CDC2), which compensate for respective partial amounts of accumulated chromatic dispersion, and filtering steps of a second type (NL1, NL2), which compensate for respective partial amounts of nonlinear impairments,

wherein said processor (P) is configured to choose an overall amount of accumulated dispersion compensated for by the whole of said filtering steps of said first type in dependence on the determined overall amount of accumulated dispersion (OCD),
wherein said filtering steps of said second type (NL1, NL2) comprise

- deriving a signal power (P(k)) of said electrical signal,
- filtering said signal power (P(k)) in the time domain using a low-pass filter (LPF),
- determining an amount of phase correction (PCT) in dependence on the filtered signal power (P'(k)),
- correcting the phase of said electrical signal by said amount of phase correction (PCT),

and wherein said processor (P) is configured to choose the filter length of said low pass-filter for a specific filtering step of said second type (NL1) in dependence on the partial amount of accumulated chromatic dispersion compensated for by the specific filtering step of said first type (CDC1) preceding said specific filtering step of said second type (NL1).

**9.** Optical receiver according to claim 8,
wherein said low pass filter (LPF) has a frequency transfer function for which a difference between the peak of the main lobe (PK1) and the peak of the most dominant side lobe (PK2) is greater than 20dB.

**10.** Optical receiver according to claim 8,
wherein said processor (P) is configured to determine said amount of phase correction (PCT) in dependence on said filtered signal power (P'(k)) and in dependence on a non-linearity coefficient.

**11.** Optical receiver according to claim 8,
wherein the filtering steps of said first type (CDC11, CDC12) comprise

- filtering said electrical signal using a filter that compensates for a predefined partial amount of accumulated chromatic dispersion.

**12.** Optical receiver according to claim 8,
wherein said electrical signal is a first electrical signal (EX(k)) corresponding to a first received optical transmission signal received along a first polarization plane,

wherein said optical interface (OI) is furthermore configured to derive a second digital electrical signal (EY(k)) corresponding to a second received optical transmission signal received along a second polarization plane, wherein said processor (P1) is furthermore configured

- to determine from both of said derived electrical signals (EX(k), EY(k)) said overall amount of accumulated chromatic dispersion,
- and to filter said second electrical signal (EY(k)), by alternating between said filtering steps of said first type (CDC11, CDC12) and said filtering steps of said second type (NL11, NL12),

wherein said filtering steps of said first type (CDC11, CDC12) comprise furthermore

- filtering said second electrical signal (EY(k)) using said filter that compensates for a predefined partial amount of accumulated dispersion,

wherein said filtering steps of said second type (NL11, NL12) comprise furthermore,

- deriving said signal power (P1(k)) from said first and said second electrical signal (EX(k), EY(k)),
- correcting the phase of said first electrical signal and the phase of said second electrical signal by said amount of phase correction (PCT1).

**13.** Optical receiver according to claim 12, wherein said processor (P1) is configured to determine said amount of phase correction (PCT1) in dependence on the filtered signal power (P1'(k)) and in dependence on a non-linearity coefficient.

**14.** Optical receiver according to claim 12, wherein said processor (P1) is furthermore configured

- to perform polarization demultiplexing, by filtering said first and said second electrical signal using a butterfly filter (BF), yielding a third (EX11(k))and a fourth (EY11(k)) electrical signal,
- to derive from said third (EX11(k)) and said fourth (EY11(k)) electrical signal a quality parameter (QP) indicating a signal quality,
- and to adapt said non-linearity coefficient in dependence on said quality parameter (QP).

**15.** Optical network node comprising an optical receiver according to claim 7.

**16.** Processor (P) for compensating chromatic dispersion and nonlinear impairments of an optical transmission path, configured

- to receive a digital electrical signal (EX(k)) corresponding to a received optical transmission signal (OS),
- to determine from the derived electrical signal (EX(k)) an overall amount of accumulated chromatic dispersion (OCD) of said optical transmission path,
- and to filter said electrical signal (EX(k)), by alternating between filtering steps of a first type (CDC1, CDC2), which compensate for respective partial amounts of accumulated chromatic dispersion, and filtering steps of a second type (NL1, NL2), which compensate for respective partial amounts of nonlinear impairments,

wherein said processor (P) is configured to choose an overall amount of accumulated dispersion compensated for by the whole of said filtering steps of said first type in dependence on the determined overall amount of accumulated dispersion (OCD),
wherein said filtering steps of said second type (NL1, NL2) comprise

- deriving a signal power (P(k)) of said electrical signal (EX(k)),
- filtering said signal power (P(k)) in the time domain using a low-pass filter (LPF),
- determining an amount of phase correction (PCT) in dependence on the filtered signal power (P'(k)),
- correcting the phase of said electrical signal by said amount of phase correction (PCT),

and wherein said processor (P) is configured to choose the filter length of said low pass-filter (LPF) for a specific filtering step of said second type (NL1) in dependence on the partial amount of accumulated chromatic dispersion compensated for by the specific filtering step of said first type (CDC1) preceding said specific filtering step of said second type (NL1).

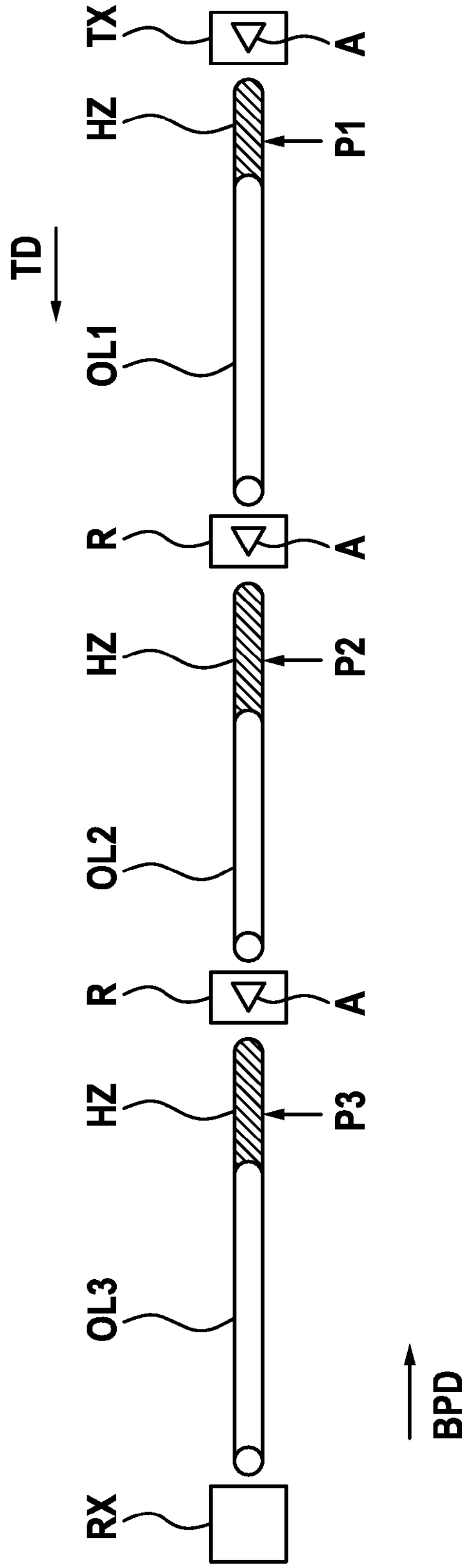


Fig. 1

Fig. 2

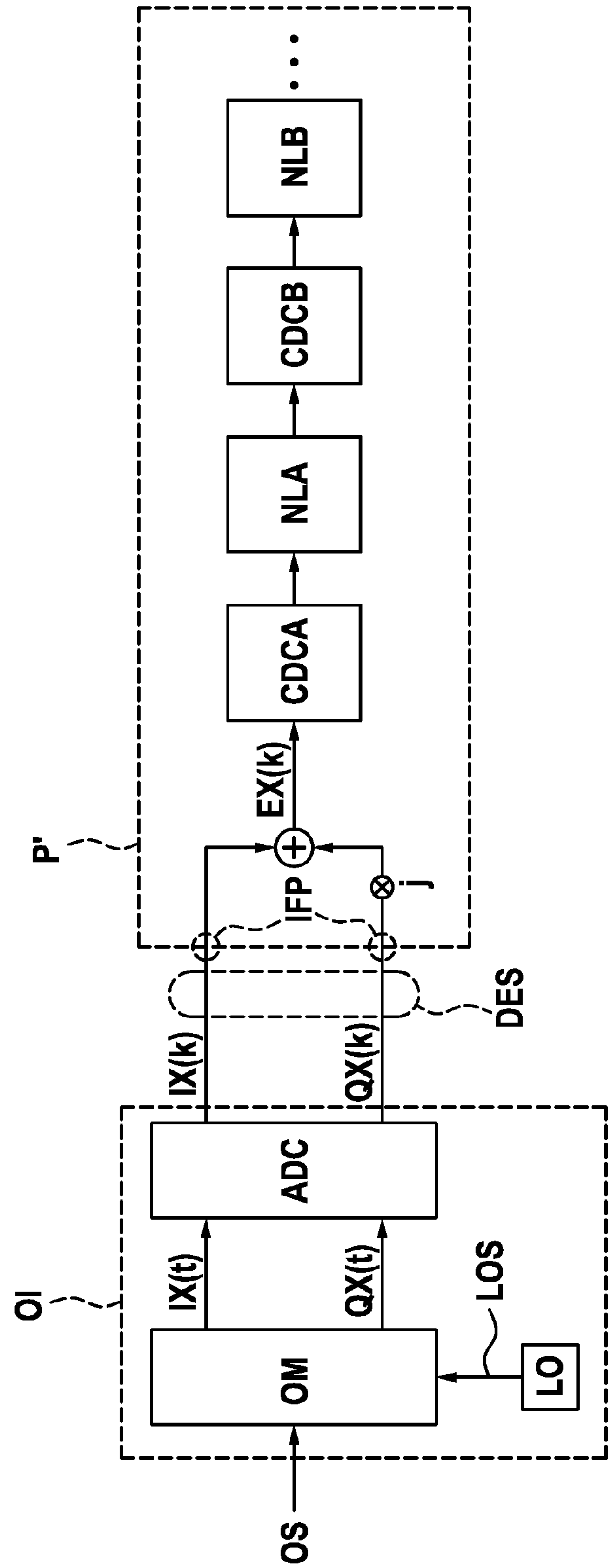
OS
OM
LO
LOS
OI
IX(t)
QX(t)
ADC
IX(k)
QX(k)
DES
IFP
j
P'
EX(k)
CDCA
NLA
CDCB
NLB

Fig. 3

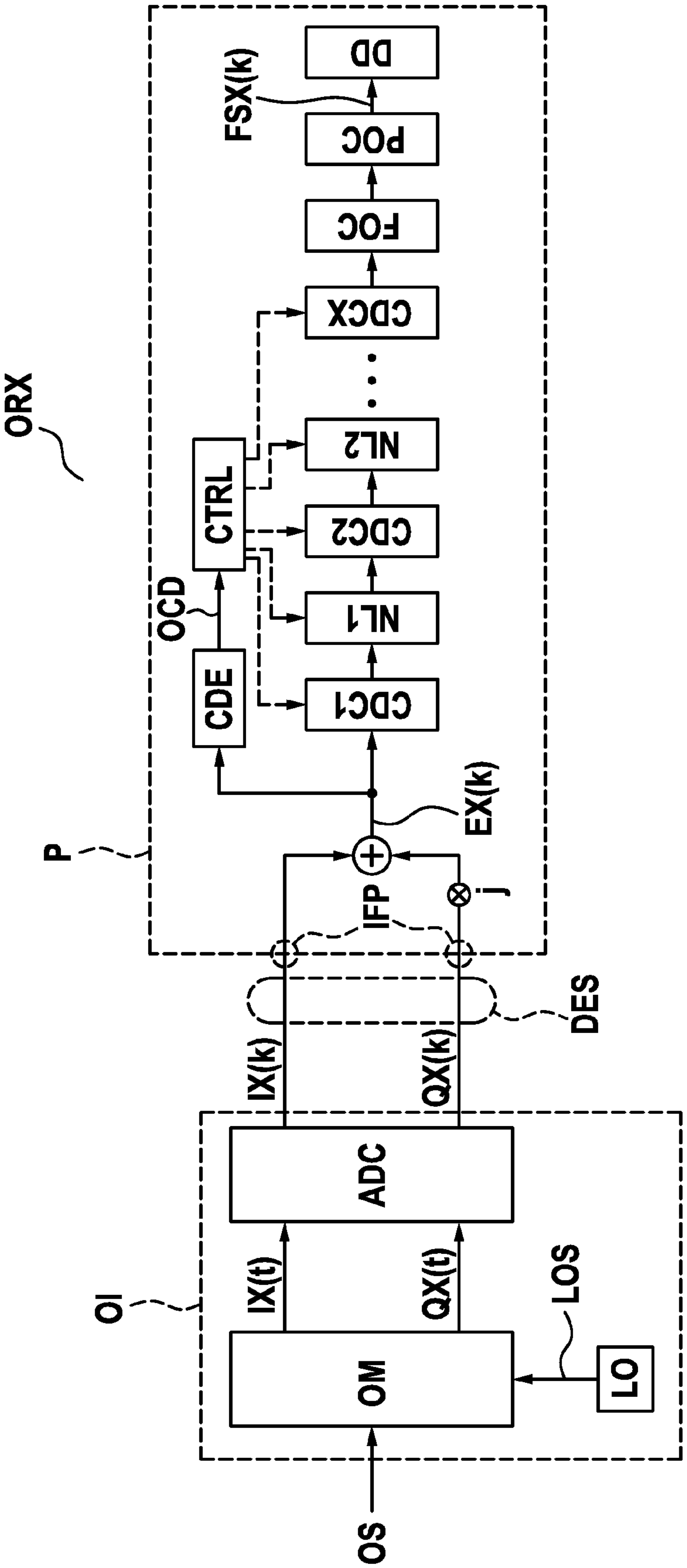
ORX
P
OI
OS
OM
LO
LOS
IX(t)
QX(t)
ADC
IX(k)
QX(k)
DES
IFP
j
EX(k)
CDE
OCD
CTRL
CDC1
NL1
CDC2
NL2
CDCX
FOC
POC
FSX(k)
DD

Fig. 4

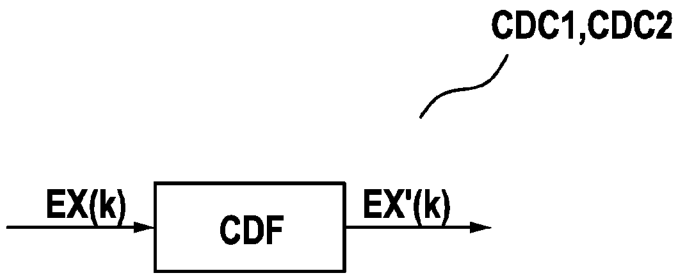


Fig. 5

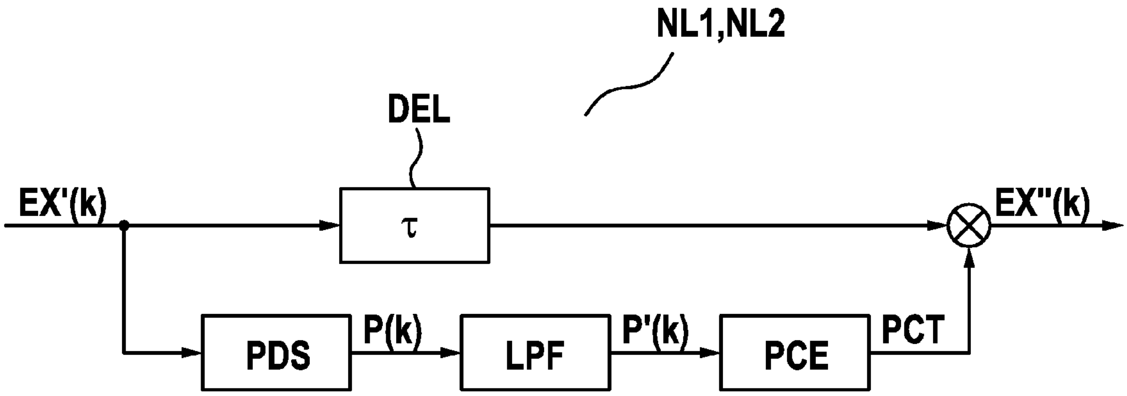

# Fig. 6a

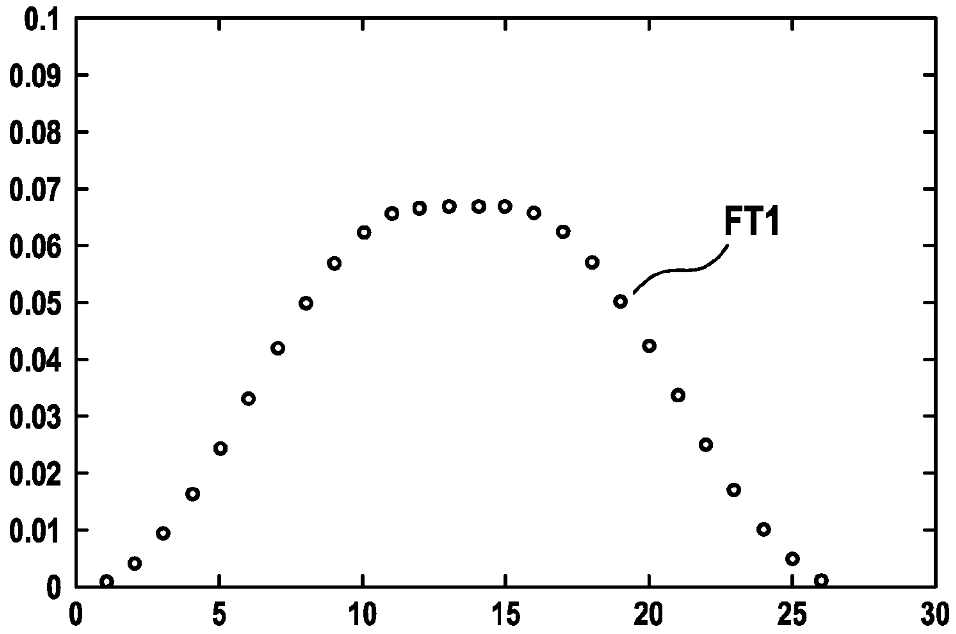
0.1
0.09
0.08
0.07
0.06
0.05
0.04
0.03
0.02
0.01
0
0
5
10
15
20
25
30
FT1

# Fig. 6b

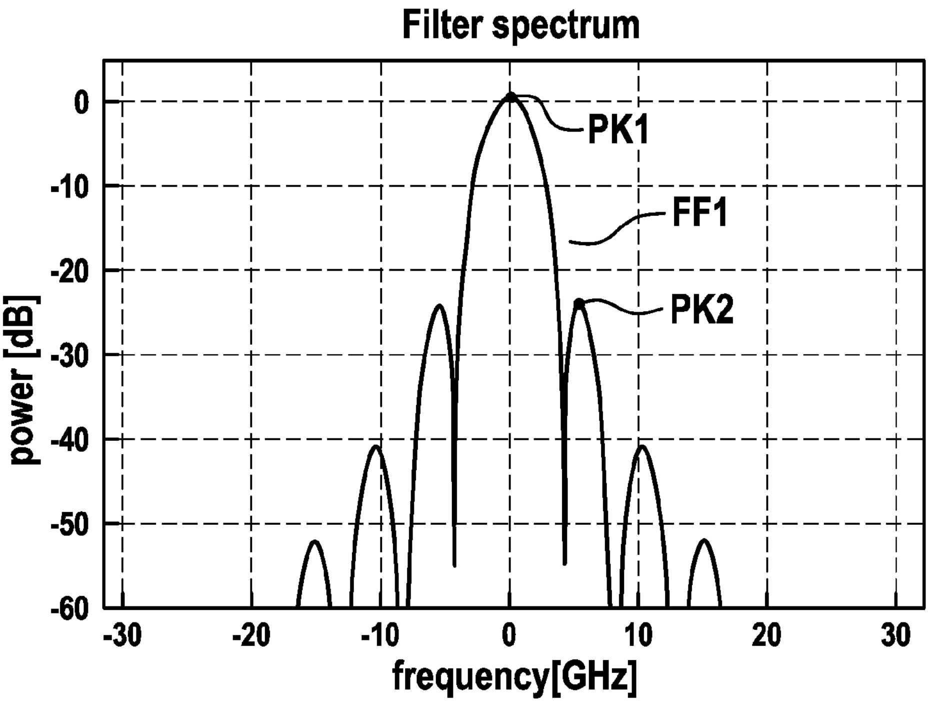
Filter spectrum
power [dB]
0
-10
-20
-30
-40
-50
-60
-30
-20
-10
0
10
20
30
frequency[GHz]
PK1
FF1
PK2

# Fig. 7a

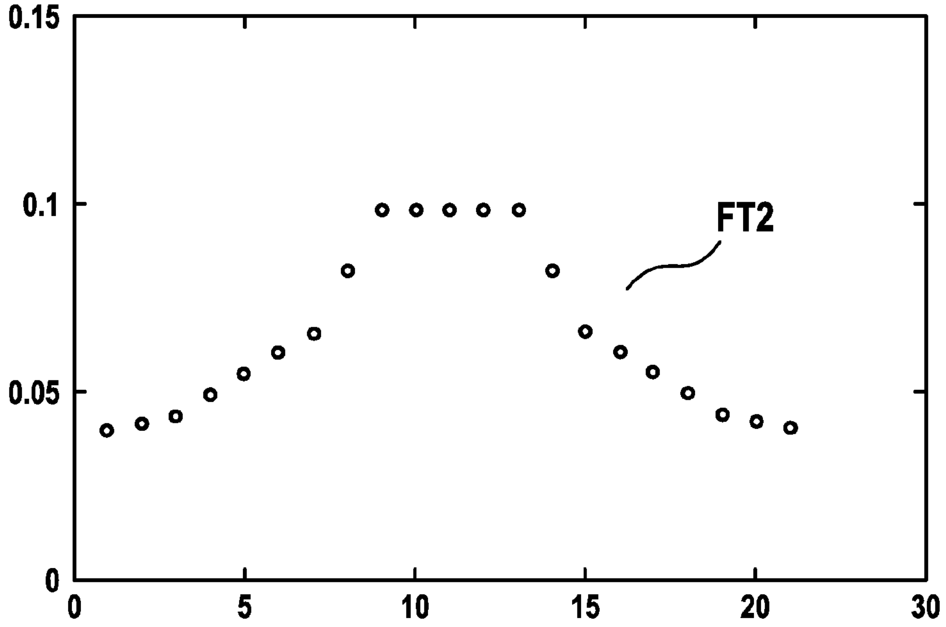
0.15
0.1
0.05
0
0
5
10
15
20
30
FT2

# Fig. 7b

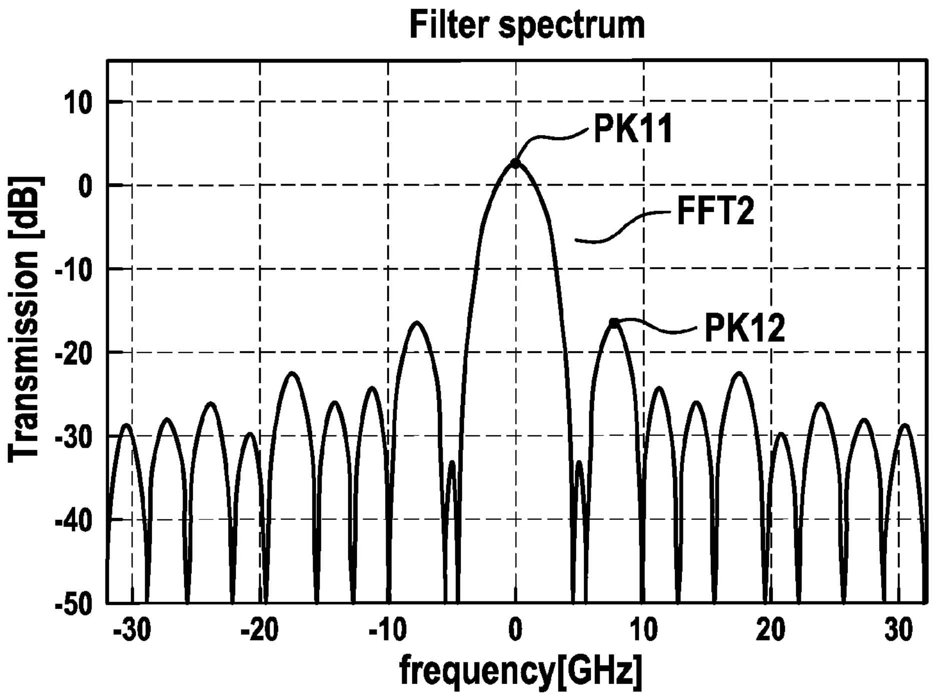
Filter spectrum
Transmission [dB]
frequency[GHz]
10
0
-10
-20
-30
-40
-50
-30
-20
-10
0
10
20
30
PK11
FFT2
PK12

Fig. 8

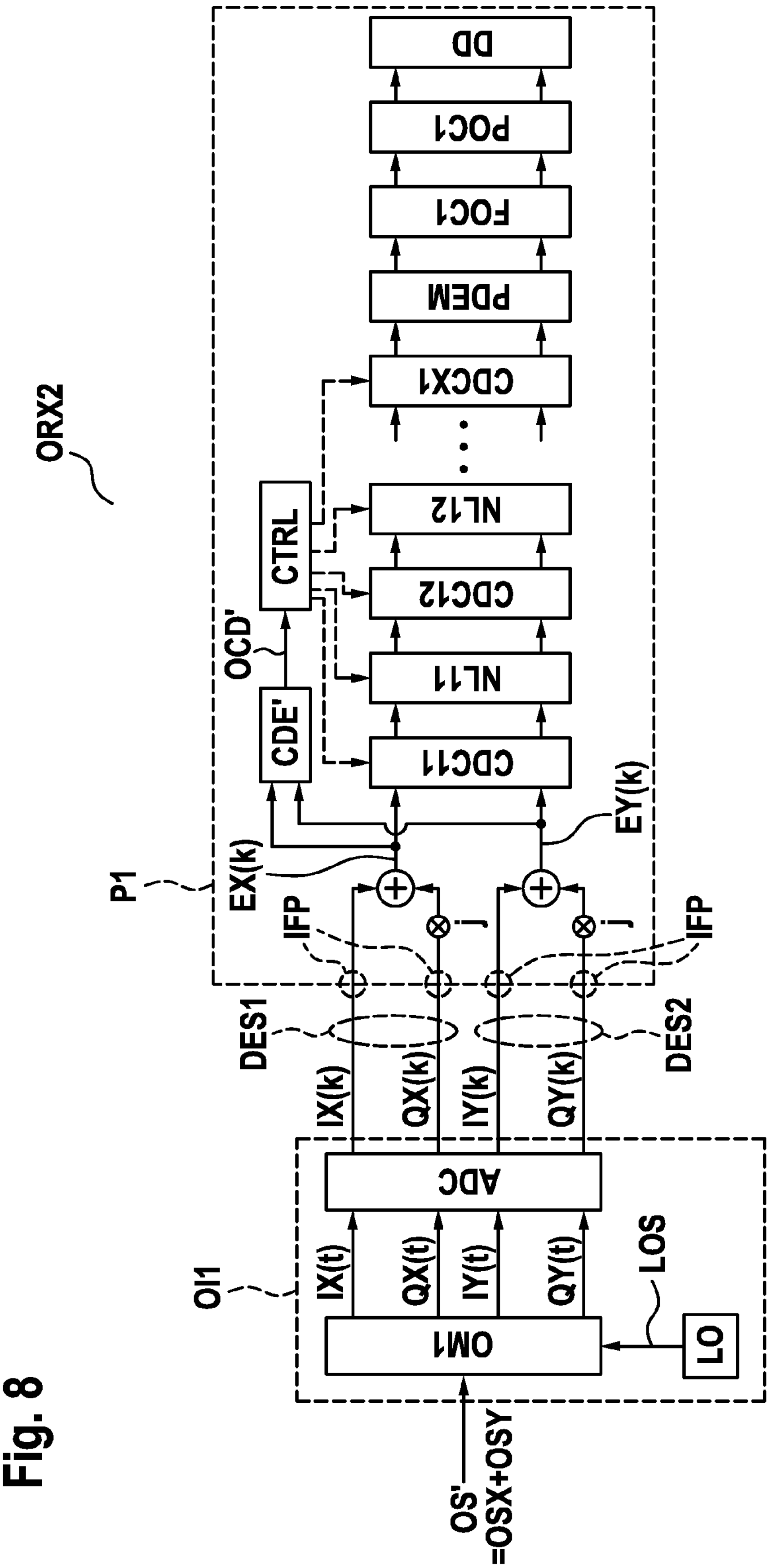
ORX2
DD
POC1
FOC1
PDEM
CDCX1
NL12
CDC12
NL11
CDC11
CTRL
OCD'
CDE'
EX(k)
EY(k)
P1
IFP
IFP
j
j
DES1
DES2
IX(k)
QX(k)
IY(k)
QY(k)
ADC
IX(t)
QX(t)
IY(t)
QY(t)
OI1
OM1
LOS
LO
OS'
=OSX+OSY

Fig. 9

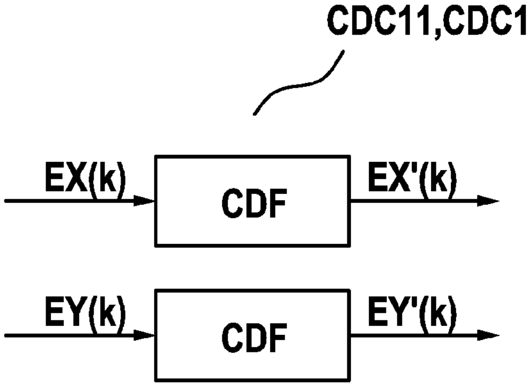
CDC11,CDC12
EX(k)
CDF
EX'(k)
EY(k)
CDF
EY'(k)

Fig. 10

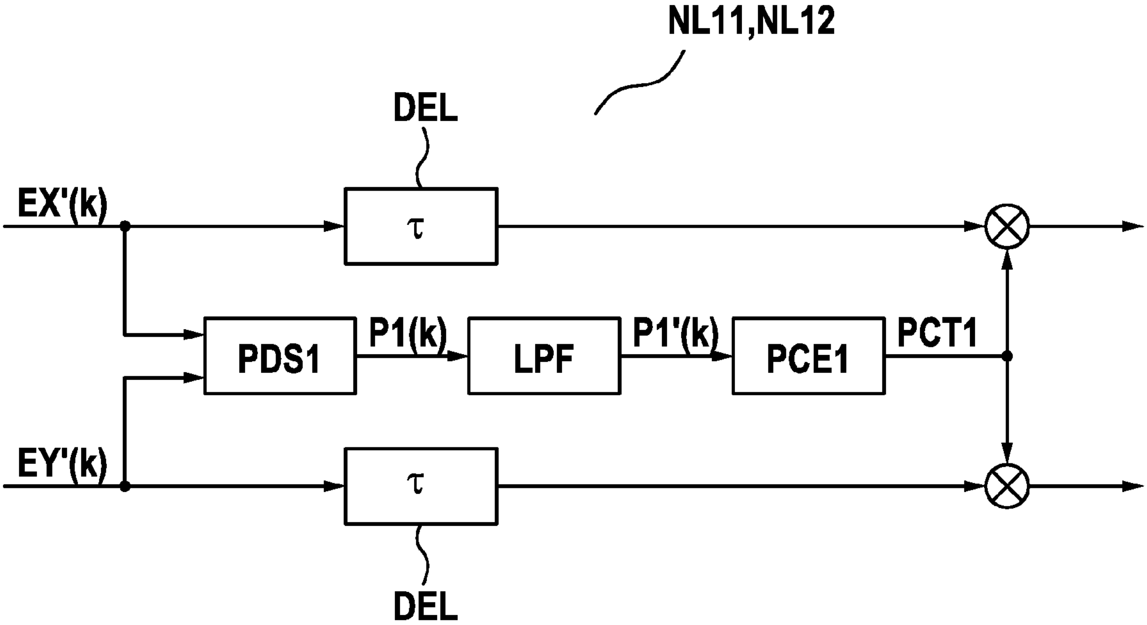
NL11,NL12
DEL
EX'(k)
τ
PDS1
P1(k)
LPF
P1'(k)
PCE1
PCT1
EY'(k)
τ
DEL

Fig. 11

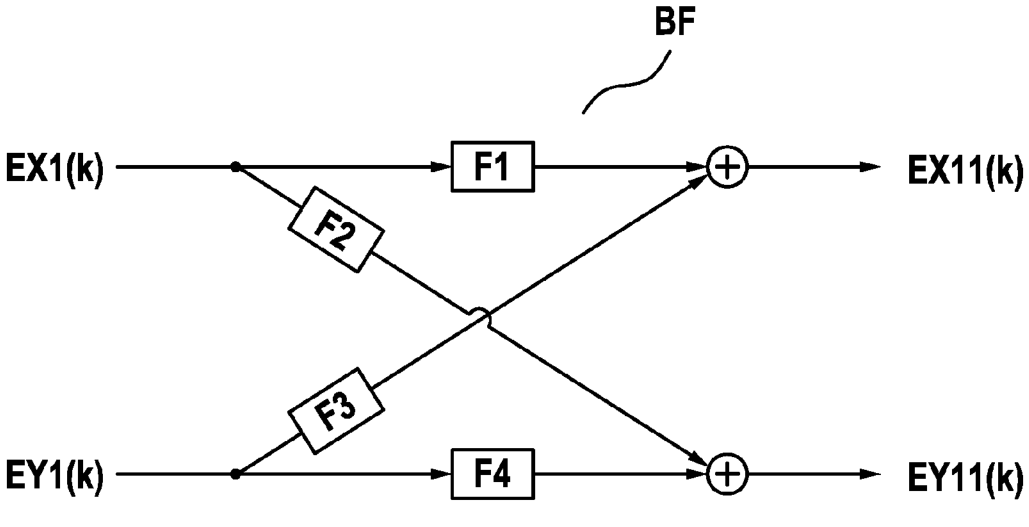


Fig. 12

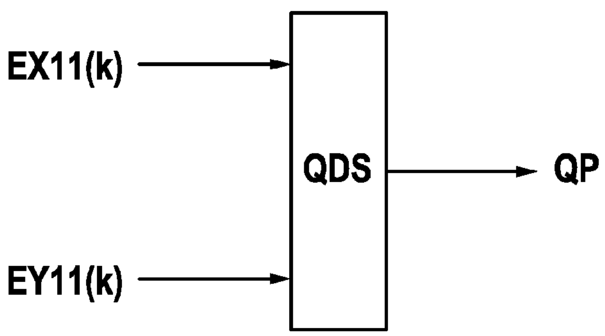

Fig. 13

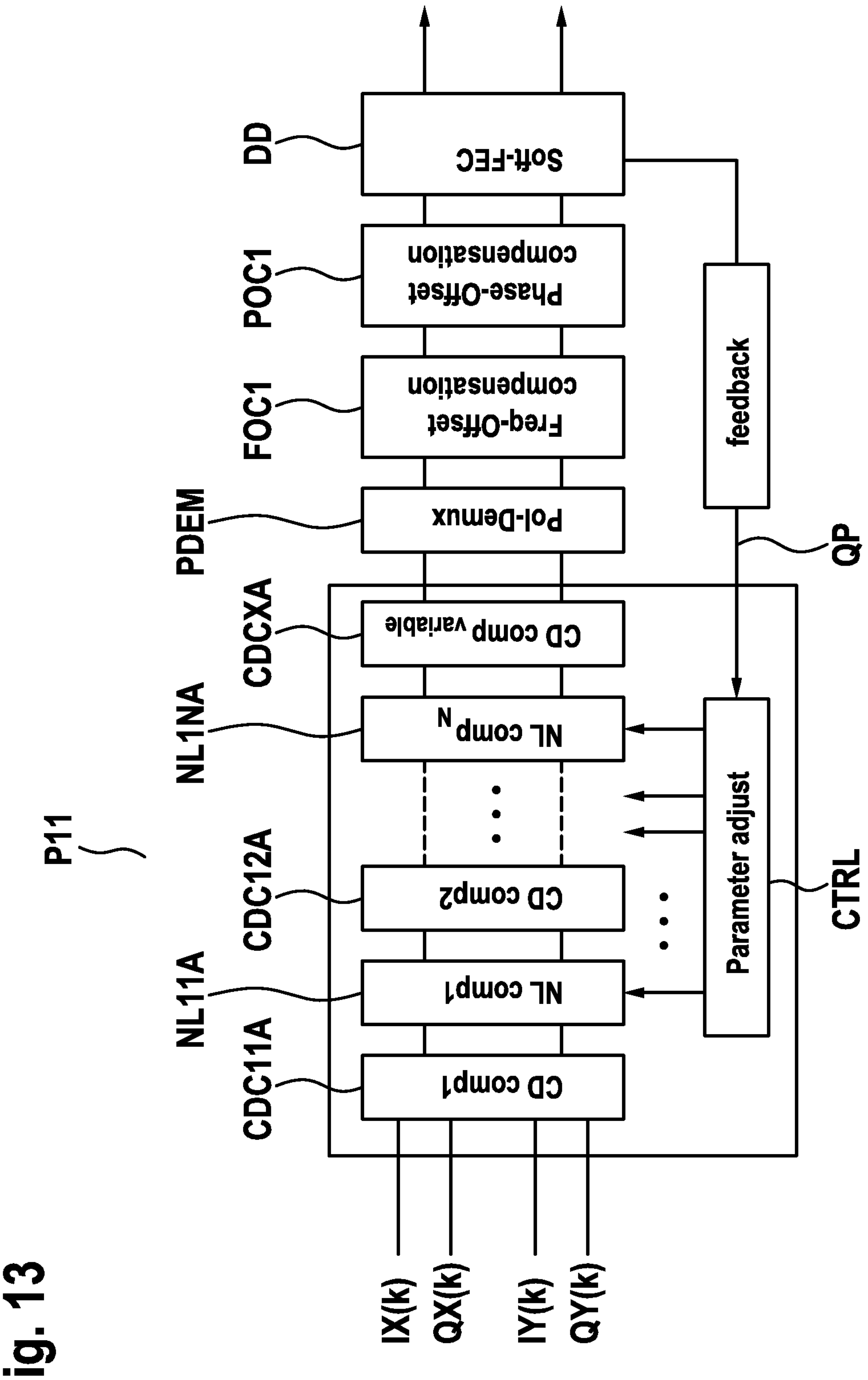

P11
IX(k)
QX(k)
IY(k)
QY(k)
CDC11A
NL11A
CDC12A
NL1NA
CDCXA
PDEM
FOC1
POC1
DD
CD comp1
NL comp1
CD comp2
NL comp_N
CD comp variable
Pol-Demux
Freq-Offset compensation
Phase-Offset compensation
Soft-FEC
Parameter adjust
feedback
CTRL
QP

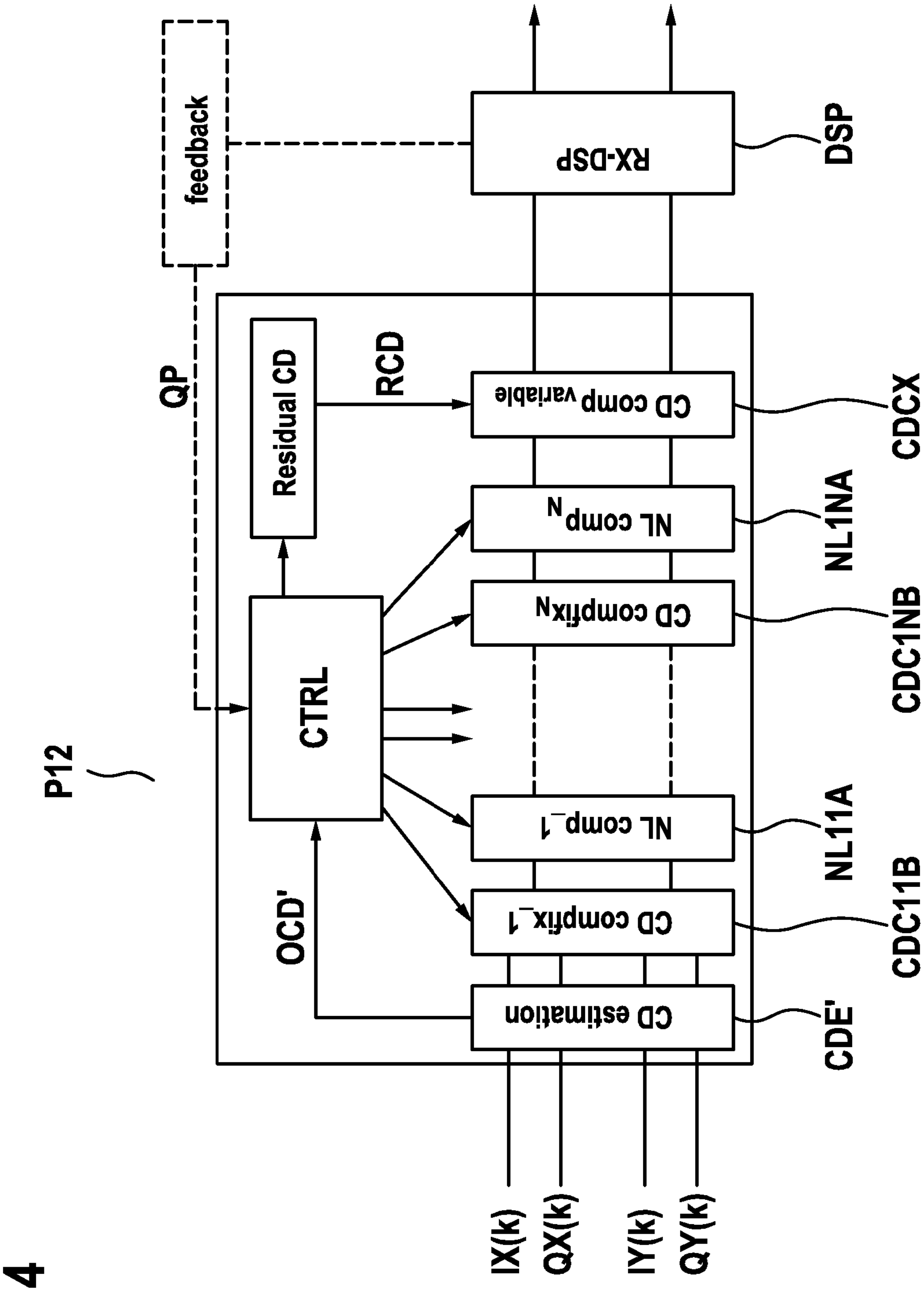
feedback
QP
P12
Residual CD
RCD
CTRL
OCD'
RX-DSP
CD comp variable
NL comp_N
CD compfix_N
NL comp_1
CD compfix_1
CD estimation
DSP
CDCX
NL1NA
CDC1NB
NL11A
CDC11B
CDE'
IX(k)
QX(k)
IY(k)
QY(k)

Fig. 14

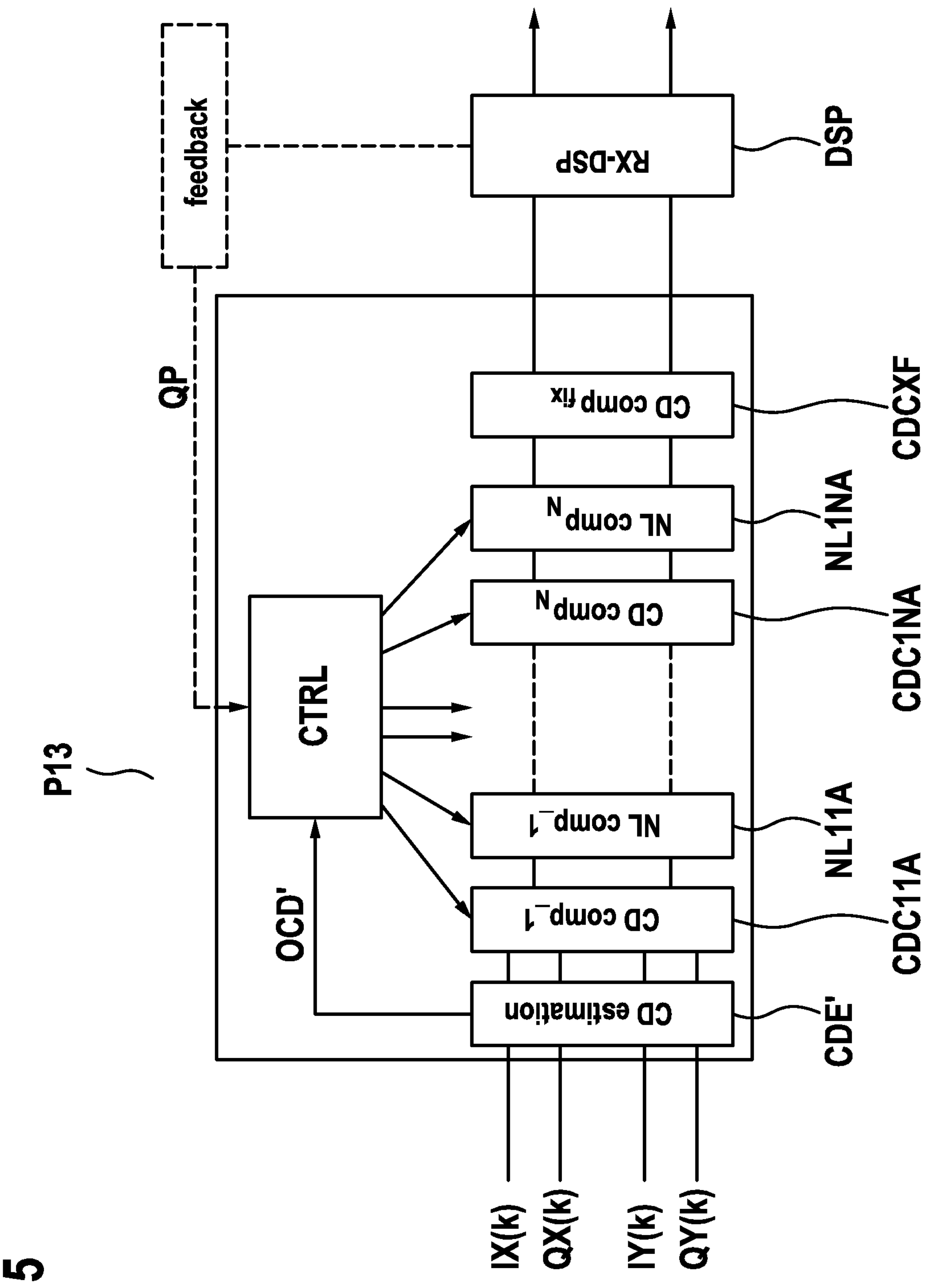
feedback
RX-DSP
DSP
QP
P13
CTRL
CD comp fix
CDCXF
NL comp N
NL1NA
CD comp N
CDC1NA
NL comp_1
NL11A
CD comp_1
CDC11A
OCD'
CD estimation
CDE'
IX(k)
QX(k)
IY(k)
QY(k)

Fig. 15

Fig. 16

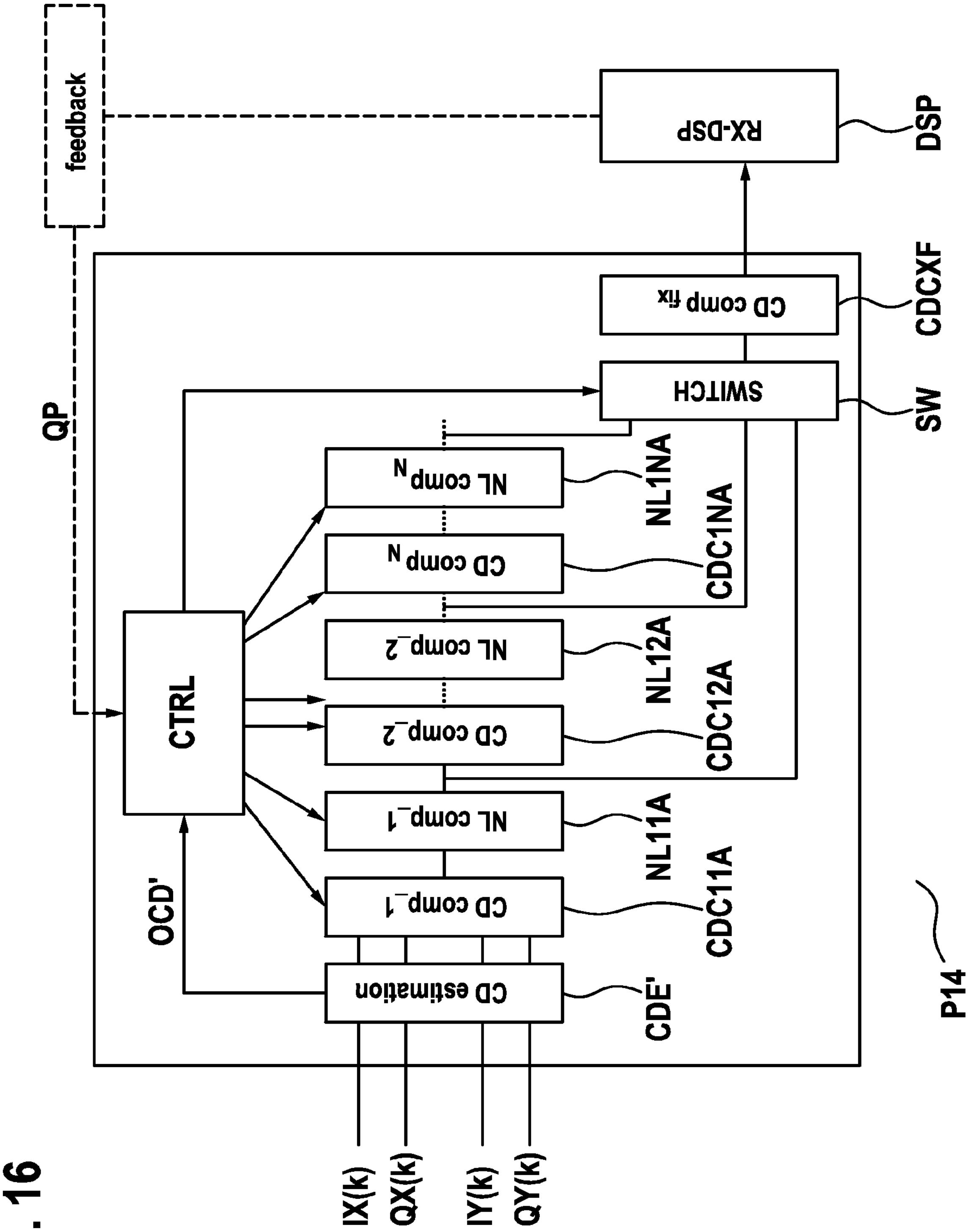
feedback
QP
RX-DSP
DSP
CDCXF
CD comp_fix
SWITCH
SW
CTRL
OCD'
CD estimation
CDE'
CD comp_1
CDC11A
NL comp_1
NL11A
CD comp_2
CDC12A
NL comp_2
NL12A
CD comp_N
CDC1NA
NL comp_N
NL1NA
P14
IX(k)
QX(k)
IY(k)
QY(k)

Fig. 17

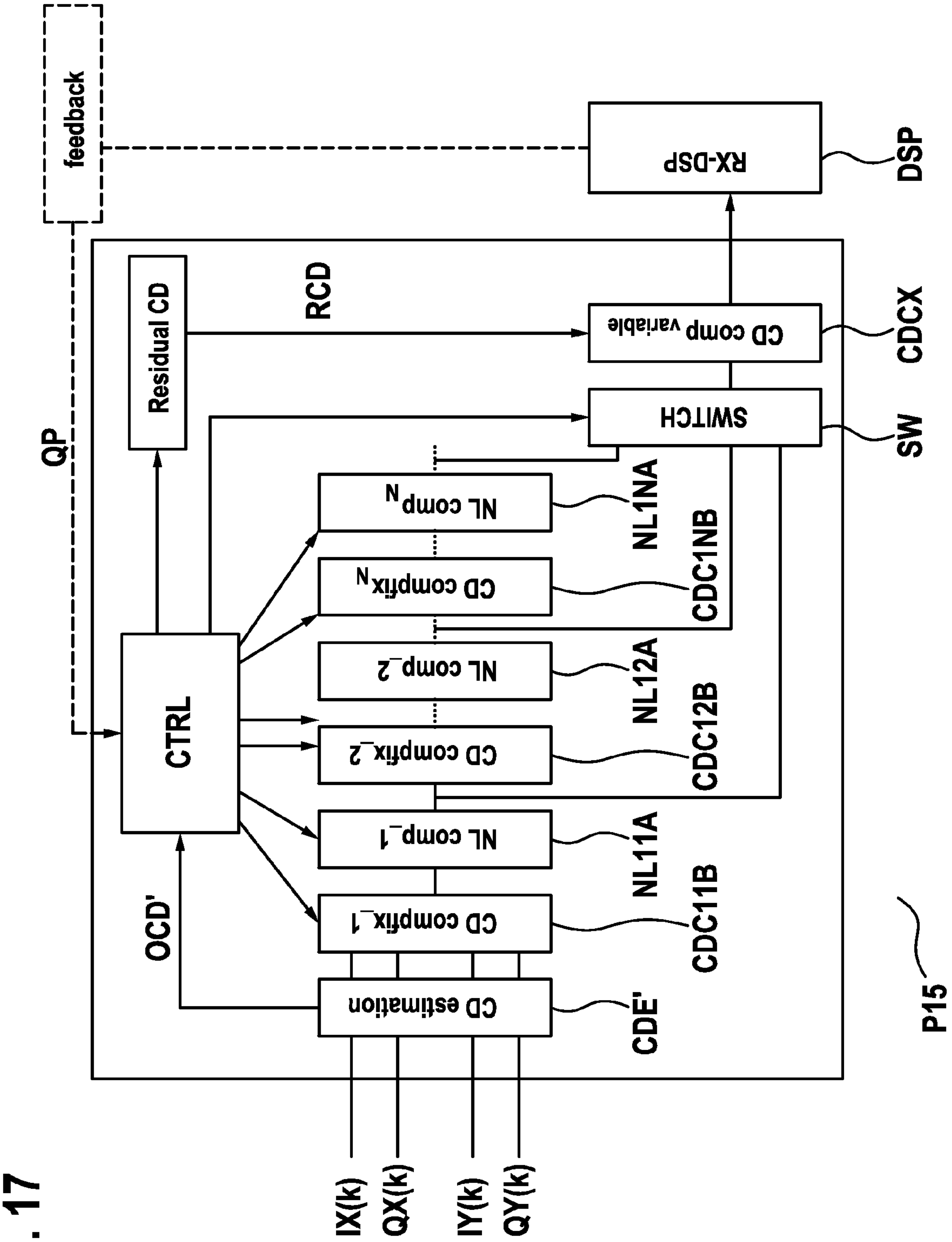
feedback
RX-DSP
DSP
QP
Residual CD
RCD
CD comp variable
CDCX
SWITCH
SW
NL comp$_N$
NL1NA
CD compfix$_N$
CDC1NB
CTRL
NL comp_2
NL12A
CD compfix_2
CDC12B
NL comp_1
NL11A
CD compfix_1
CDC11B
OCD'
CD estimation
CDE'
P15
IX(k)
QX(k)
IY(k)
QY(k)

Fig. 18a

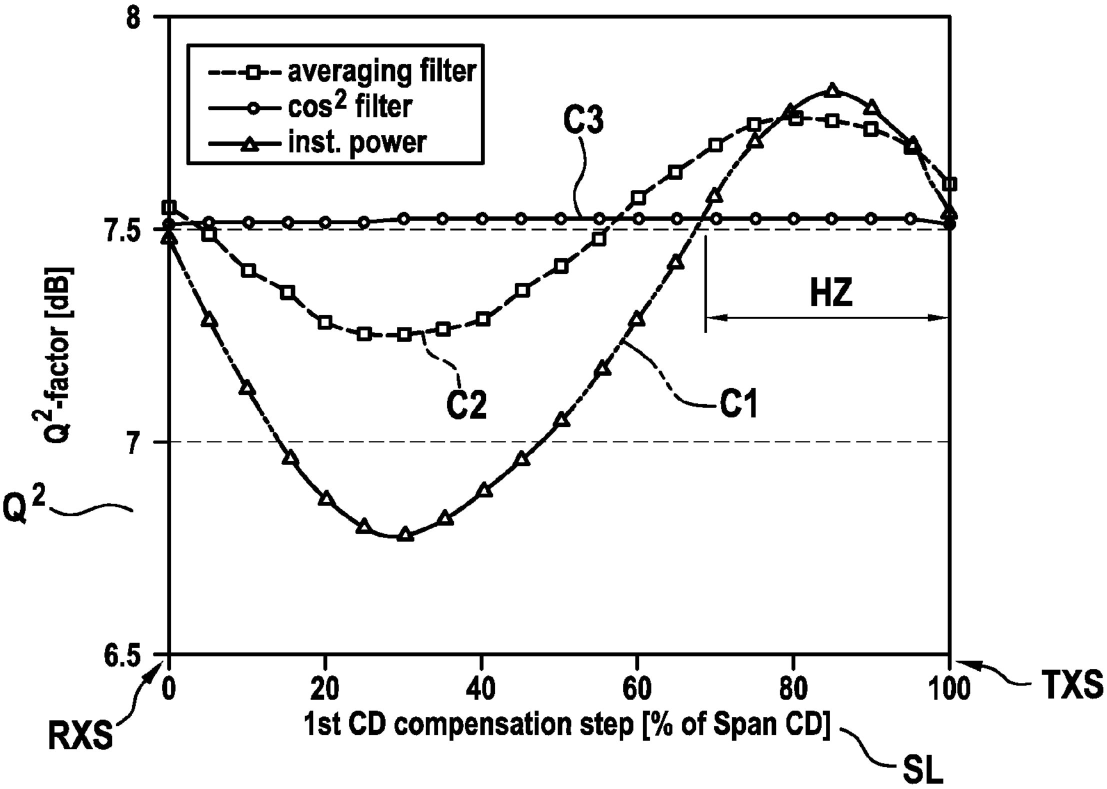


Fig. 18b

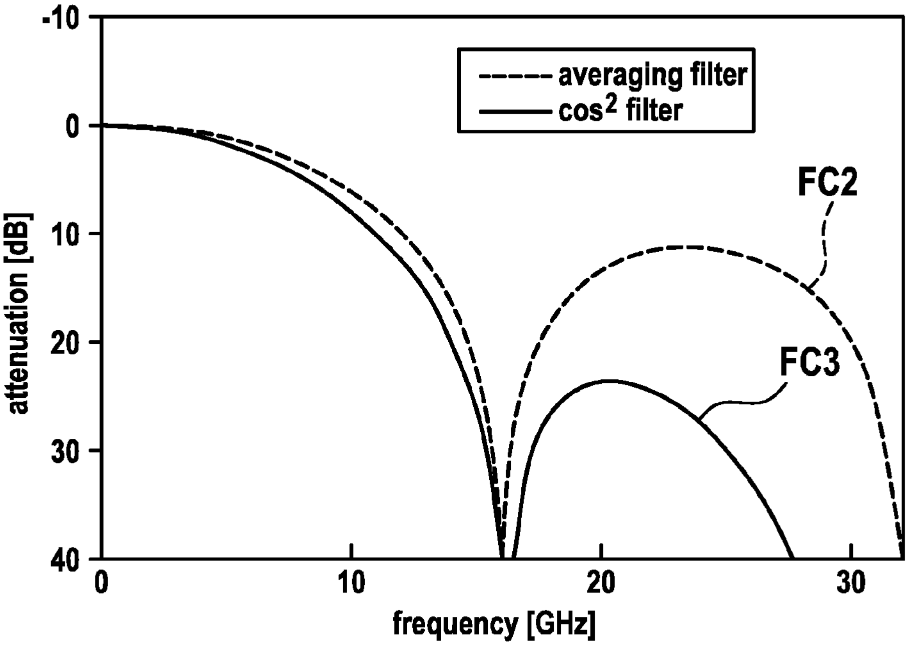

Fig. 19

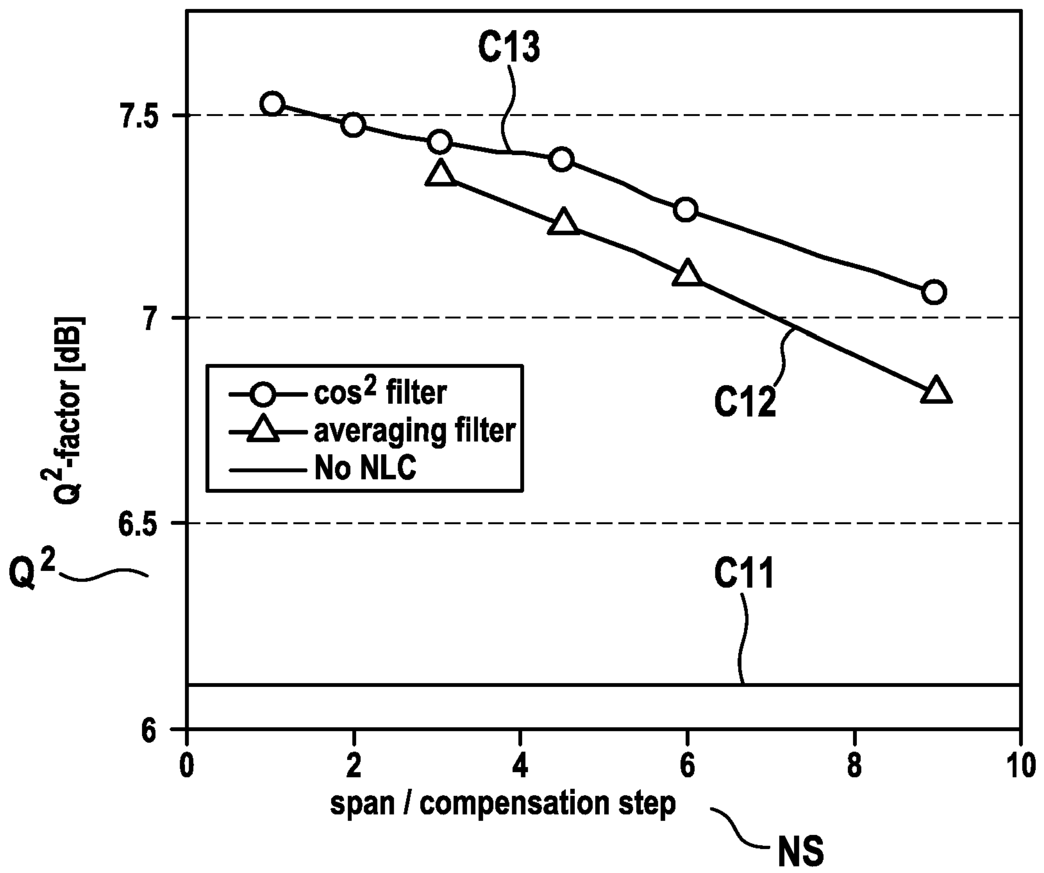
C13
7.5
7
6.5
6
Q2-factor [dB]
Q2
cos2 filter
averaging filter
No NLC
C12
C11
0
2
4
6
8
10
span / compensation step
NS

Fig. 20

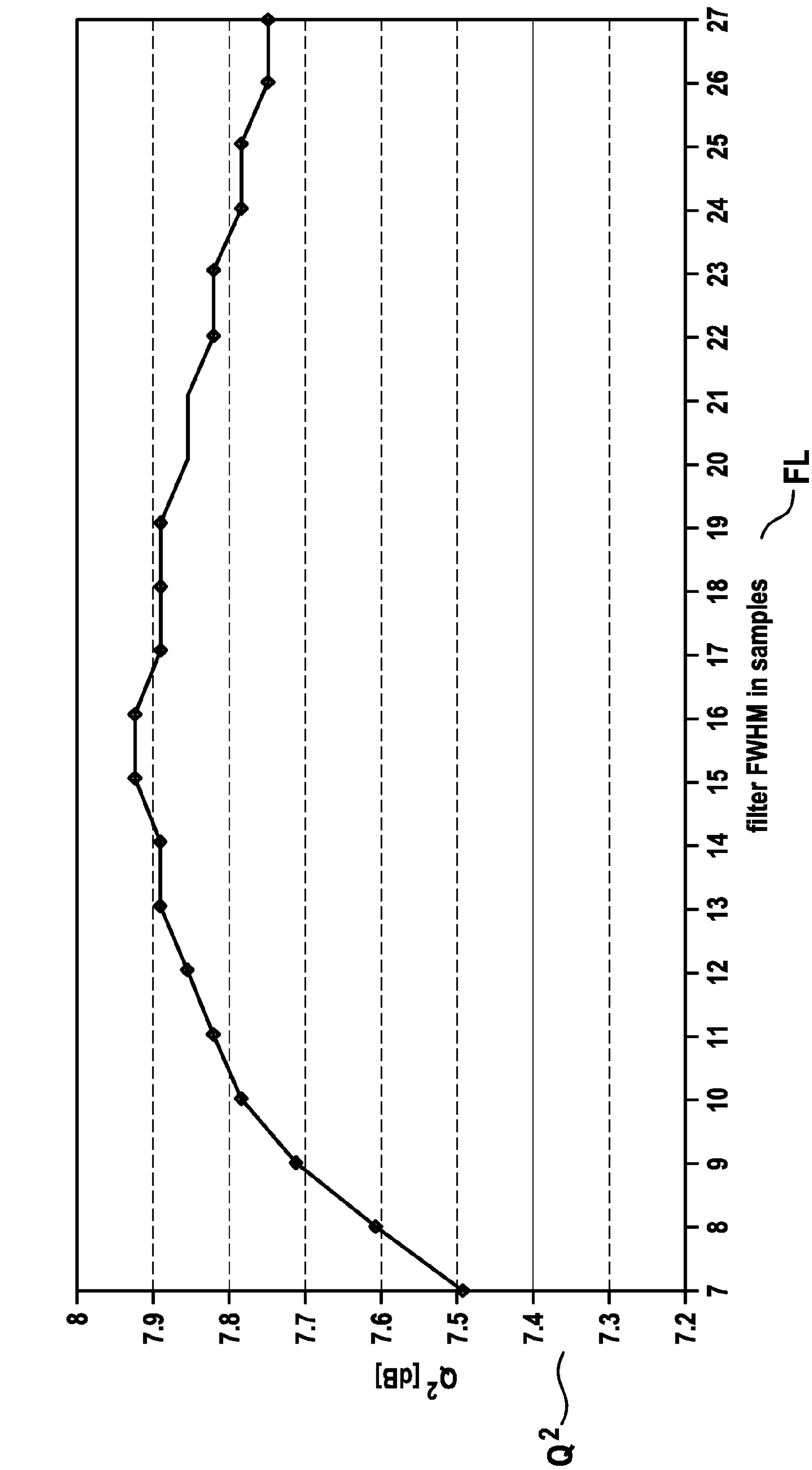
Q² [dB]
8
7.9
7.8
7.7
7.6
7.5
7.4
7.3
7.2
7
8
9
10
11
12
13
14
15
16
17
18
19
20
21
22
23
24
25
26
27
filter FWHM in samples
FL
Q²

Europäisches Patentamt
European Patent Office
Office européen des brevets

# EUROPEAN SEARCH REPORT

Application Number
EP 14 30 6469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/156443 A1 (LOWERY ARTHUR JAMES [AU] ET AL) 20 June 2013 (2013-06-20)<br>* figure 1(a) *<br>* paragraphs [0001], [0002] *<br>* paragraph [0004] *<br>* paragraph [0006] *<br>* paragraph [0050] *<br>* paragraphs [0055], [0056] *<br>* paragraph [0060] *<br>* paragraphs [0063], [0064] *<br>* paragraphs [0068], [0069] *<br>* paragraph [0075] *<br>----- | 1-16 | INV.<br>H04B10/2513<br>H04B10/2543<br>H04B10/61 |
| A | US 2011/255879 A1 (XIE CHONGJIN [US] ET AL) 20 October 2011 (2011-10-20)<br>* figure 4 *<br>* paragraphs [0028] - [0035] *<br>* paragraph [0038] *<br>----- | 1-16 | |
| A | US 2012/301146 A1 (MATEO EDUARDO [US] ET AL) 29 November 2012 (2012-11-29)<br>* figures 1,2,3 *<br>* paragraphs [0002], [0005], [0014] *<br>----- | 1-16 | TECHNICAL FIELDS SEARCHED (IPC)<br>H04B |
| A | TAKAHITO TANIMURA ET AL: "Semi-blind nonlinear equalization in coherent multi-span transmission system with inhomogeneous span parameters", OPTICAL FIBER COMMUNICATION (OFC), COLLOCATED NATIONAL FIBER OPTIC ENGINEERS CONFERENCE, 2010 CONFERENCE ON (OFC/NFOEC), IEEE, PISCATAWAY, NJ, USA, 21 March 2010 (2010-03-21), pages 1-3, XP031676785,<br>* the whole document *<br>-----<br>-/-- | 1-16 | |

The present search report has been drawn up for all claims

1

| Place of search | Date of completion of the search | Examiner |
|---|---|---|
| Munich | 2 March 2015 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 14 30 6469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | IP; KAHN: "Compensation of Dispersion and Nonlinear Impairments using Digital Backpropagation", JOURNAL OF LIGHTWAVE TECHNOLOGY, vol. 26, no. 20, 15 October 2008 (2008-10-15), pages 3416-3425, XP002736625, * the whole document * ----- | 1-16 | |

TECHNICAL FIELDS SEARCHED (IPC)

The present search report has been drawn up for all claims

1

| Place of search | Date of completion of the search | Examiner |
|---|---|---|
| Munich | 2 March 2015 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 30 6469

This annex lists the patent family members relating to the patent documents cited in the above-mentioned European search report. The members are as contained in the European Patent Office EDP file on
The European Patent Office is in no way liable for these particulars which are merely given for the purpose of information.

02-03-2015

| Patent document cited in search report | Publication date | Patent family member(s) | Publication date |
|---|---|---|---|
| US 2013156443 A1 | 20-06-2013 | AU 2011223488 A1 | 18-10-2012 |
| | | EP 2543150 A2 | 09-01-2013 |
| | | US 2013156443 A1 | 20-06-2013 |
| | | WO 2011106826 A2 | 09-09-2011 |
| US 2011255879 A1 | 20-10-2011 | CN 102835046 A | 19-12-2012 |
| | | EP 2559172 A1 | 20-02-2013 |
| | | JP 2013526152 A | 20-06-2013 |
| | | KR 20130018298 A | 20-02-2013 |
| | | TW 201210217 A | 01-03-2012 |
| | | US 2011255879 A1 | 20-10-2011 |
| | | WO 2011130193 A1 | 20-10-2011 |
| US 2012301146 A1 | 29-11-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **IP AND KAHN.** Compensation of Dispersion and Nonlinear Impairments using Digital Backpropagation. *Journal of Lightwave Technology,* 15 October 2008, vol. 26 (20), 3416-3425
- **CORSINI.** Blind Adaptive Chromatic Dispersion Compensation and Estimation for DSP-Based Coherent Optical Systems. *Journal of Lightwave Technology,* 01 July 2013, vol. 31 (13), 2131-2139
- **S. SAVORY.** Digital filters for coherent optical receivers. *Opt. Express,* 2008, vol. 16, 804-817
- Implementation Efficient Nonlinear Equalizer Based on Correlated Digital Backpropagation. **L. LI ; Z. TAO ; L. DOU ; W. YAN ; S. ODA ; T. TANIMURA ; T. HOSHIDA ; J. RASMUSSEN.** Optical Fiber Communication Conference/National Fiber Optic Engineers Conference 2011, OSA Technical Digest (CD). Optical Society of America, 2011
- **SEB SAVORY.** Digital Coherent Optical Receivers: Algorithms and Subsystems. *IEEE JOURNAL OF SELECTED TOPICS IN QUANTUM ELECTRONICS,* September 2010, vol. 16 (5
- **PAULUZZI, D.R. ; BEAULIEU, N.C.** A comparison of SNR estimation techniques for the AWGN channel. *Communications, IEEE Transactions on,* October 2000, vol. 48 (10), 1681, , 1691